Europäisches Patentamt

European Patent Office

Office européen des brevets

(19)

(11) **EP 0 483 296 B1**

(12) **EUROPÄISCHE PATENTSCHRIFT**

(45) Veröffentlichungstag und Bekanntmachung des Hinweises auf die Patenterteilung:
**27.05.1998 Patentblatt 1998/22**

(21) Anmeldenummer: **91905271.2**

(22) Anmeldetag: **01.03.1991**

(51) Int Cl.6: **G11B 20/14**, H03M 5/12, H04L 25/06, H04L 25/49

(86) Internationale Anmeldenummer:
**PCT/EP91/00379**

(87) Internationale Veröffentlichungsnummer:
**WO 91/13436 (05.09.1991 Gazette 1991/21)**

(54) **VERFAHREN ZUM AUSWERTEN BINÄRER INFORMATIONEN EINER MAGNETSPEICHERKARTE**

PROCESS FOR EVALUATING BINARY DATA OF A MAGNETIC STORAGE CARD

PROCEDE D'EVALUATION DES INFORMATIONS BINAIRES D'UNE CARTE A MEMOIRE MAGNETIQUE

(84) Benannte Vertragsstaaten:
**DE ES FR GB IT NL SE**

(30) Priorität: **01.03.1990 DE 4006426**

(43) Veröffentlichungstag der Anmeldung:
**06.05.1992 Patentblatt 1992/19**

(60) Teilanmeldung: **97103870.8 / 0 785 550**

(73) Patentinhaber: **Siemens Nixdorf Informationssysteme Aktiengesellschaft 33102 Paderborn (DE)**

(72) Erfinder:
• **BEHR, Hubert**
  **33098 Paderborn (DE)**
• **FICK, Wolfgang**
  **33178 Borchen (DE)**
• **JÄGER, Waldemar**
  **33106 Paderborn (DE)**

(74) Vertreter: **Fuchs, Franz-Josef, Dr.-Ing. Postfach 22 13 17 80503 München (DE)**

(56) Entgegenhaltungen:
EP-A- 0 027 547       EP-A- 0 300 826
EP-A- 0 332 079       EP-A- 0 464 477
EP-A- 0 473 417       DE-A- 3 714 244
GB-A- 1 150 309       GB-A- 2 168 575
US-A- 4 227 175       US-A- 4 358 846
US-A- 4 626 670

• **K. Steinbuch Taschenbuch der Datenverarbeitung, 1962, S.811,812,821-823**
• **IBM Technical Disclosure Bulletin, Vol.7, No.6, November 1964 (New York, US), W.E. Bass: "Error detecting read amplifier" pages 430-431**

EP 0 483 296 B1

**Beschreibung**

Die Erfindung betrifft ein Verfahren zum Auswerten binärer Informationen, nach dem Oberbegriff des Anspruchs 1.

Ein solches Verfahren wird zum Lesen von Informationen verwendet, die mit einem magnetischen Aufzeichnungsgerät zuvor auf einer Magnetkarte abgespeichert worden sind. Derartige Magnetkarten haben eine breite Verwendung im privaten und im geschäftlichen Bereich gefunden. Beispielsweise dienen sie zur Personenidentifizierung, als Scheckkarte, als Berechtigungsausweis etc. Die Informationen sind auf einer oder mehreren Spuren nach einem bestimmten standardisierten Code aufgezeichnet. Ein solcher Code ist zum Beispiel in der ISO-Norm 7811/2-1985 (E) beschrieben und wird als Zweifrequenzcode bezeichnet. Bei diesem sind Flußwechsel, d.h. magnetische Flüsse mit abwechselnden Vorzeichen der Magnetisierungsrichtungen, in festen Abständen in der Magnetspur eingeprägt. Um einen Binärwert 1 zu definieren, wird mittig zwischen diesen Flußwechseln ein weiterer Flußwechsel eingefügt. Fehlt dieser weitere Flußwechsel, so liegt der Binärwert 0 vor. Zum Auslesen der magnetischen Informationen wird die Magnetspur an einem elektromagnetischen Wandler mit annähernd konstanter Geschwindigkeit vorbeigeführt, beispielsweise indem ein Motor die Magnetkarte relativ zu einem festen Wandler befördert, ein beweglicher Wandler über die ortsfeste Magnetspur geführt wird oder indem eine Person mit einer Handbewegung die Magnetkarte längs eines Schlitzes führt, in welchem der Wandler fest angeordnet ist.

Infolge der Abtastbewegung wird im Wandler z.B. nach dem elektrodynamischen Prinzip eine Spannung induziert, deren Vorzeichen von der Richtung des magnetischen Flusses auf der Magnetspur abhängt. Da die Abtastgeschwindigkeit in einem weiten Bereich variieren kann, müssen durch eine Normierung die zeitlichen Abstände der Flußwechsel bzw. der induzierten Spannungsimpulse vor dem eigentlichen Einlesen der Informationen festgestellt werden. Gemäß der erwähnten ISO-Norm werden hierzu auf der Magnetspur in einem den Informationen vorgeschalteten Bereich Flußwechsel mit Abständen voneinander aufgezeichnet, die dem Binärwert 0 entsprechen.

Die technisch-physikalischen Eigenschaften einer Magnetkarte müssen im allgemeinen innerhalb vorgegebener Toleranzgrenzen liegen, damit ein sicheres Auslesen der gespeicherten Informationen gewährleistet ist. Dies ist bei neuen und wenig gebrauchten Magnetkarten der Fall. Mit zunehmenden Alter und Benutzung der Magnetkarte können sich ihre Eigenschaften nachteilig ändern. So kann ihre Oberflächengestalt durch mechanische und thermische Beanspruchung verändert sein, beispielsweise Wölbungen oder Wellen aufweisen. Auf der Magnetspur können sich ferner Gebrauchsspuren, wie Kratzer, Abrieb, Schmutz oder feine Haarrisse zeigen. Weiterhin kann auch der in der Magnetspur eingeprägte magnetische Fluß durch Alterung, Überlagerung von magnetischem Störfluß sowie durch Temperatureinwirkung verringert sein. Neben solchen Veränderungen der Eigenschaften der Magnetkarte können auch Abnutzungen des elektromagnetischen Wandlers wie Abrieb oder fehlerhafter Magnetisierungszustand sowie Schmutz das Erzeugen von Spannungsimpulsen beeinträchtigen. Diese Veränderungen der Eigenschaften der Magnetkarte und des Wandlers können dazu führen, daß die vom Wandler abgegebene Spannung von Störsignalen überlagert ist, die binäre Informationen vortäuschen, oder daß der Spannungsverlauf so verändert ist, daß er außerhalb eines vorgegebenen Auswertebereichs liegt, in dem die in ihm enthaltene Information noch sicher ausgewertet werden kann. Die Folge davon ist, daß die gespeicherte Information fehlerhaft oder unvollständig ausgelesen wird. Die Magnetkarte kann dann die ihr zugedachte Funktion nicht mehr erfüllen und ist für den Benutzer wertlos.

Beim bekannten Verfahren werden die binären Informationen durch eine analoge Auswertung der Spannungsimpulse gewonnen. Dieser geht im allgemeinen eine Verstärkung der Spannungsimpulse voraus, die anschließend tiefpaßgefiltert und gleichgerichtet werden. Zum Erkennen der Maximalwerte der gleichgerichteten Spannungsimpulse, die, wie noch erläutert wird, zum Ermitteln des zeitlichen Abstands der Impulse voneinander und damit der Informationsgewinnung dienen, wird der zeitliche Verlauf der Spannungsimpulse differenziert und aus dem Ergebnis in einer Diskriminatorschaltung Rechteckimpulse erzeugt, deren Anstiegsflanken den Zeitpunkt der Maximalwerte definieren. Unter Zuhilfenahme der Rechteckimpulse wird es dann möglich, die Spannungsimpulse jeweils in ihrem Extremwert zu erfassen und so die gegenseitigen zeitlichen Abstände der Spannungsimpulse zur Informationsgewinnung auszuwerten.

Eine solche Auswertung liefert aber nur bei einwandfreien Magnetkarten brauchbare Ergebnisse. Sind die Spannungsimpulse von vorher erwähnten Störsignalen überlagert, so entstehen durch die Differentiation Störimpulse. Beim nachfolgend erzeugten Rechtecksignal definiert die Anstiegsflanke nicht mehr den Extremwert des Spannungsimpulses, sondern einen Extremwert des Störsignals. Dadurch werden falsche Zeitabstände zwischen den Spannungsimpulsen ermittelt und die auf der Magnetspur abgespeicherten binären Informationen werden fehlerhaft ausgewertet.

Die US-A-4,626,670 betrifft ein Verfahren zum Auswerten binärer Informationen, die auf einer Magnetkarte in Form von Flußwechseln nach dem Zweifrequenzverfahren gespeichert sind. Zu Beginn des Abtastvorgangs erfolgt eine Normierung mit gleichbleibenden Vorinformationen.

Aus IBM Technical Disclosure Bulletin Vol. 7, Nr. 6, Seite 430 bis 431, ist ein Zweifrequenz-Abtastverfahren bekannt. Die Erkennung digitaler Informationen wird aus dem Vorhandensein oder Fehlen von Spannungsimpulsen zwischen zwei Taktimpulsen abgeleitet. Eine andere Möglichkeit besteht darin, die Polarität aufeinanderfolgender Taktimpulse zur digitalen Informationsgewinnung auszuwerten.

Die EP-A-0 300 826 beschreibt ein Abtastverfahren, bei dem ein Ausgangssignal mit vorgegebener Frequenz, die größer als die Datenbitrate ist, abgetastet wird. Die digitalen Abtastwerte werden rechnerisch zur Feststellung eines Nulldurchganges ausgewertet. Das abgetastete Signal wird mit gespeicherten Parametern verglichen. Auf diese Weise können digitale Informationen ermittelt werden.

Aus der GB-A-2,168,575 ist die Auswertung von Abtastsignalen bekannt. Diese Abtastsignale werden zwei voneinander abweichenden Filtern zugeführt. Die gefilterten Signale werden zur Informationsgewinnung verwendet.

Es ist daher Aufgabe der Erfindung, Verfahren zum Auswerten binärer Informationen anzugeben, das eine zuverlässige Auswertung der auf der Magnetspur einer Magnetspeicherkarte magnetisch gespeicherten Information auch dann noch gewährleistet, wenn die Magnetspur und/oder der elektromagnetische Wandler durch Alterung, Verschmutzung oder Beschädigung beeinträchtigt ist.

Diese Aufgabe wird durch das im Patentanspruch 1, angegebene Verfahren gelöst. Vorteilhafte Weiterbildungen sind in den abhängigen Ansprüchen angegeben.

Bei einer ersten Auswertungsvariante, die in dem Satz von Auswerte verfahren vor sein kann, ist vorgesehen, daß der zeitliche Verlauf des Ausgangssignals des elektromagnetischen Wandlers in durch die Normierung vorgegebenen Zeitabständen erfaßt wird, und daß ein in diesem Verlauf auftretender Extremwert festgestellt wird, und daß das Verhältnis der Art dieses Extremwertes zu der Art eines zuvor festgestellten Extremwertes zur Informationsgewinnung ausgewertet wird.

Diese Auswertungsvariante beruht auf der Überlegung, daß die Störsignale, die eine binäre Information vortäuschen können, während der Abtastung der Magnetspur zufällig auftreten. Wenn nun die Erfassung des Verlaufs des Ausgangssignals nur in bestimmten Zeitabständen erfolgt, so werden diejenigen Störsignale ausgeblendet, die außerhalb dieser Erfassungszeit liegen. Unter der Annahme, daß die Störsignale mit einer annähernd gleichverteilten Wahrscheinlichkeit im Verlauf des Ausgangssignals vorkommen, wird die Wahrscheinlichkeit für das durch ein Störsignal bedingte Ausfallen einer Magnetkarte um einen Faktor reduziert, der sich aus dem Quotienten aus gesamter Abtastzeit und Summe der Erfassungszeiten bei einem Abtastvorgang ergibt. Da die Erfassungszeit sehr kurz sein kann, sie kann bei einer digitalen Erfassung abhängig vom verwendeten Sample-and-Hold-Baustein sowie vom A/D-Wandler im Mikrosekundenbereich liegen, kann durch Anwendung dieses Prinzips die Zuverlässigkeit der Auswertung wesentlich verbessert werden.

In den durch die Normierung vorgegebenen Zeitabständen wird ein Extremwert des Ausgangssignals festgestellt und dessen Art, d.h. Maximalwert oder Minimalwert, mit der des im vorangegangenen Abschnitt festgestellten Extremwerts verglichen. Das Feststellen des Extremwerts geschieht unabhängig vom Betrag der Spannungsamplitude des Ausgangssignals, so daß dessen Pegel nicht in die Auswertung eingeht. Dies bedeutet, daß auch bei kleinen Pegeln des Ausgangssignals infolge Schwächung des Magnetflusses auf der Magnetspur oder infolge Abstandsschwankungen zwischen Wandler und Magnetspur die Informationsauswertung möglich ist.

Aus dem Ergebnis des Vergleichs der Art des aktuellen Extremwerts mit der Art des vorangegangenen Extremwerts kann direkt auf das Vorliegen des Binärwerts 0 oder des Binärwerts 1 geschlossen werden. Dies soll anhand eines Beispiels näher erläutert werden. Gemäß dem bereits erwähnten Zweifrequenzcode sind die zeitlichen Abstände zwischen Spannungsimpulsen eines Binärwerts 0 doppelt so lang wie die eines Binärwerts 1. Die Länge der Zeitabstände für Binärwerte 0 sind zuvor bei der Normierung ermittelt worden. Wenn in einem solchen Zeitabstand im Ausgangssignal ein Extremwert einer bestimmten Art, zum Beispiel ein Maximalwert oder ein Minimalwert, festgestellt wird und der in einem Zeitabstand zuvor festgestellte Extremwert von der gleichen Art ist, so bedeutet dies notwendigerweise, daß zwischen diesen Extremwerten ein weiterer Extremwert anderer Art aufgetreten ist, denn definitionsgemäß haben aufeinander folgende Spannungsimpulse entgegengesetzte Vorzeichen und damit Extremwerte unterschiedlicher Art im Signalverlauf zur Folge. Die im Ausgangssignalverlauf enthaltene binäre Information hat demnach bei gleichartigen Extremwerten den Wert 1. Wenn die im Zeitabstand der Abtastung aufeinander folgenden Extremwerte in ihrer Art unterschiedlich sind, d. h. auf einen Maximalwert folgt ein Minimalwert und umgekehrt, so liegt als Information der Binärwert 0 vor.

Eine bevorzugte Ausführungsform der ersten Auswertungsvariante ist dadurch gekennzeichnet, daß für jeden Erfassungsvorgang ein Zeitabschnitt vorgegeben wird. Durch diese Maßnahme wird es möglich, das Vorliegen eines Extremwerts mit noch höherer Zuverlässigkeit und dessen zeitliche Lage im Zeitabschnitt festzustellen, denn zur Auswertung können mehrere im Zeitabschnitt liegende Werte des Ausgangssignals herangezogen werden. Die Länge des Zeitabschnitts kann je nach Anwendungsfall unterschiedlich sein. Bei nur gering gestörtem Ausgangssignal des Wandlers reicht eine kurze Zeitabschnittslänge aus, während es bei stark gestörtem Ausgangssignal vorteilhaft ist, die Länge des Zeitabschnitts entsprechend größer zu wählen. Der Extremwert kann dann unter einer größeren Zahl von Werten des Ausgangssignals ausgewählt werden, und relative Maxima oder Minima im Signalverlauf können aussortiert werden. Je größer die Zahl dieser Werte ist, um so genauer kann der Extremwert sowie seine Art ermittelt werden. Andererseits ist zu berücksichtigen, daß mit länger werdenden Zeitabschnitt auch der Einfluß von Störsignalen steigt. In der Praxis hat sich daher für viele Anwendungsfälle eine Zeitabschnittslänge kürzer als 1/6 der bei der Normierung ermittelten Zeitabstände zwischen zwei Spannungsimpulsen bewährt.

Eine zweite Auswertungsvariante zeichnet sich dadurch aus, daß im zeitlichen Verlauf des Ausgangssignals des elektromagnetischen Wandlers aufeinander folgende Extremwerte unterschiedlicher Art festgestellt werden, daß die Zeit zwischen diesen Extremwerten gemessen wird, daß das Verhältnis dieser Zeit zu den durch die Normierung vorgegebenen Zeitabständen zur Informationsgewinnung ausgewertet wird, und daß im weiteren Verlauf der Auswertung die nächste Zeitmessung erst beim nachfolgenden Extremwert beginnt, wenn die Zeit kürzer als die Zeitabstände ist.

Bei dieser Auswertungsvariante werden zum Gewinnen der binären Informationen die im Ausgangssignal des Wandlers in unterschiedlichen Zeitabständen auftretenden Extremwerte ausgewertet. Diese sind unabhängig vom absoluten Spannungspegel des Ausgangssignals, da sie nur relativ zu benachbarten Werten definiert sind. Sie bilden daher Maximalwerte, wenn die sie umgebenden Werte kleiner bzw. Minimalwerte, wenn diese Werte größer sind. Wird durch Schmutz oder durch einen vergrößerten Abstand zwischen Wandler und Magnetkarte die magnetische Kopplung zwischen dem Magnetfluß auf der Magnetspur und dem Wandler verringert, so ist auch der beim Abtasten der Magnetspur induzierte Spannungsimpuls entsprechend verringert. Dies trifft nicht nur für seine Impulsspitze, sondern auch für alle ihm benachbarten Spannungswerte zu, so daß der Extremwert durch Vergleich mit ihm benachbarten Werten eindeutig definiert ist. Somit bleiben Störungen, die ein Abschwächen des Ausgangssignals des Wandlers bewirken, weitgehend ohne Einfluß auf die Auswertung der im Ausgangssignal enthaltenen binären Informationen.

Die Binärzustände der Informationen auf der Magnetkarte werden durch Zeitmessung ermittelt. Das Ergebnis dieser Messung wird mit dem Zeitabstand verglichen, der bei der Normierung mit den Vorinformationen ermittelt worden ist. Wenn die gemessene Zeit zwischen zwei aufeinander folgenden Extremwerten mit Binärwert 0 unterschiedlicher Art, d.h. ein Maximalwert folgt auf einen Minimalwert oder umgekehrt, annähernd gleich diesem Zeitabstand ist, so hat die von der Magnetspur gelesene magnetische Information den Binärwert 0 - ist sie kleiner, so hat sie den Binärwert 1. Nach einem ermittelten Extremwert, beispielsweise einem Maximalwert, wird die Zeit bis zum Auftreten des Extremwerts anderer Art, z.B. eines Minimalwerts, ermittelt. Beim gewählten Beispiel bedeutet dies, daß weitere in diese Zeit fallende Maximalwerte nicht berücksichtigt werden. Die Störsicherheit des Verfahrens wird somit erhöht.

Wenn ein Binärwert 0 erkannt wird, so wird die nächste Zeitmessung bei demselben Extremwert gestartet, der die letzte Zeitmessung beendet hat, und es wird die Zeit bis zum Eintreffen des nächsten Extremwerts anderer Art festgestellt. Wenn jedoch ein Binärwert 1 erkannt wird, so wird die nächste Zeitmessung nicht mit dem Extremwert gestartet, der die letzte Messung beendet hat, sondern erst beim darauf folgenden Extremwert. Durch diese Maßnahme wird erreicht, daß die Zeitmessung jeweils bei dem Spannungsimpuls neu gestartet wird, dessen Periode gleich dem bei der Normierung ermittelten Zeitabstand ist. Spannungsimpulse mit kleinerer Periode bzw. höherer Frequenz werden nicht zum Starten einer Zeitmessung verwendet. Diese hat somit einen eindeutigen Bezugpunkt, und Fehlinterpretationen der im Ausgangssignal auftretenden Spannungsimpulse oder hochfrequenter Störimpulse werden vermieden.

Eine bevorzugte Ausführungsform der zweiten Auswertungsvariante zeichnet sich dadurch aus, daß die gemessene Zeit mit dem 0,7-fachen der bei der Normierung ermittelten Zeitabstände verglichen wird. Beim Zweifrequenzcode haben die Flußwechsel mit Binärwert 0 einen zeitlichen Abstand, der doppelt so groß ist wie der des Binärwerts 1. Beim Vergleich der gemessenen Zeit zwischen zwei Extremwerten unterschiedlicher Art mit dem 0,7-fachen der Normierungszeitabstände haben die gemessenen Zeiten für den Binärwert 1 und den Binärwert 0 im Normalfall jeweils den gleichen zeitlichen Abstand zum Referenzwert. Dieser Abstand kann als Störabstand für das Erkennen eines Binärwertes aufgefaßt werden. Durch die Verfahrensschritte der Weiterbildung ist der Störabstand für beide Binärwerte gleich lang, nämlich das 0,3-fache des Normierungszeitabstandes. Die binären Informationszustände werden mit gleichem Störabstand erfaßt, wodurch die Zuverlässigkeit des Auswertungsverfahrens weiter optimiert ist.

Die vorgenannte Ausführungsform kann derart wetergebildet sein, daß die gewonnenen Informationen einer Fehlerprüfung unterzogen werden, und daß beim Auftreten eines Fehlers die gemessene Zeit mit dem 0,7- bis 0,66-Fachen oder mit dem 0,7- bis 0,75-Fachen der Zeitabstände verglichen wird.

Durch diese Maßnahme wird die Störsicherheit des vorgenannten Auswertungsverfahrens noch weiter erhöht. Wird nämlich ein Lesefehler, z.B. durch eine Parity-Bit Prüfung, festgestellt, so kann dieser möglicherweise darin begründet sein, daß der Störabstand, gebildet durch den zeitlichen Abstand zum Referenzwert, zu klein ist. Je nach dem, ob der Fehler bei der Erkennung des Binärwerts 1 oder 0 auftritt, wird nun durch die genannten Maßnahmen der Störabstand in die eine oder die andere Richtung vergrößert. Es ist auch möglich, den Störabstand bei Auftreten eines Fehlers zunächst in eine beliebige Richtung zu vergrößern. Wird dann bei der nachfolgenden Auswertung abermals ein Fehler festgestellt, so wird daraufhin der Störabstand in die andere Richtung vergrößert. Dadurch wird spätestens beim zweiten Versuch der Störabstand tatsächlich vergrößert und dem aufgetretenen Fehler entgegengewirkt.

Eine dritte Auswertungsvariante ist dadurch gekennzeichnet, daß der zeitliche Verlauf des Ausgangssignals über jeden durch die Normierung vorgegebenen Zeitabstand erfaßt wird, daß für jeweils einen Binärzustand der Information mindestens ein Verlaufsmuster mit der Länge des Zeitabstandes bereitgestellt wird, daß der erfaßte Verlauf des Ausgangssignals mit mindestens zwei Verlaufsmustern verglichen wird, und daß das Vergleichsergebnis mit der geringsten Abweichung ermittelt wird.

Diese Auswertungsvariante beruht auf der Überlegung, daß der zeitliche Verlauf des Ausgangssignals für jeden Binärzustand der Information eine charakteristische Kurvenform hat. Diese kann für jeden Binärzustand in Form mindestens eines Verlaufsmusters angegeben werden. Wenn nun der Istverlauf des Ausgangssignals mit einem dieser Verlaufsmuster übereinstimmt, so liegt eine hohe Wahrscheinlichkeit dafür vor, daß die im Ausgangssignalverlauf abgebildete binäre Information den Wert hat, der dem entsprechenden Verlaufsmuster zugeordnet ist.

Die vorliegende Auswertungsvariante nutzt diese Erkenntnis, indem sie den Ausgangssignalverlauf eines Normierungszeitabstandes mit mindestens zwei Verlaufsmustern vergleicht, die den Binärzuständen 0 und 1 zugeordnet sind. Da der tatsächliche Ausgangssignalverlauf infolge von überlagerten Störungen vom theoretischen Verlauf abweicht, kann zwischen den Vergleichsmustern und dem Ausgangssignalverlauf im allgemeinen keine exakte Übereinstimmung festgestellt werden. Deshalb werden die Abweichungen des Verlaufs des Musters von dem des Ausgangssignals festgestellt und das Verlaufsmuster mit der geringsten Abweichung ermittelt. Dieses ist dem tatsächlichen Ausgangssignalverlauf am ähnlichsten und sein ihm zugeordneter Binärwert wird als die auf der Magnetspur vorhandene Information verwendet.

Wenn dem Ausgangssignalverlauf ein Störsignal überlagert ist oder wenn sich seine Kurvenform infolge Dämpfung verändert, so werden die beim Vergleich mit den Verlaufsmustern jeweils festgestellten Abweichungen größer. Solange die jeweiligen Abweichungen im Verhältnis zum erwarteten Ausgangssignal nicht zu groß sind. kann die binäre Information im Ausgangssignal noch eindeutig bestimmt werden. Da sich die jeweiligen Kurvenformen des Ausgangssignalverlaufs für die verschiedenen 3inärwerte stark unterscheiden und sich dies in den Abweichungen auswirkt, ist auch bei einem verrauschten Ausgangssignalverlauf oder bei stark gedämpften Ausgangssignalen noch eine zuverlässige Informationsauswertung gewährleistet.

Eine Ausgestaltung der vorgenannten dritten Auswertungsvariante ist dadurch gekennzeichnet, daß für den Binärwert 0 als Verlaufsmuster eine Gerade mit konstanter positiver oder negativer Steigung und für den Binärwert 1 eine Gerade mit konstanter positiver und dann negativer Steigung oder umgekehrt mit Vorzeichenwechsel in der Mitte des Zeitabstandes bereitgestellt wird.

Die genannten Verläufe sind jeweils charakteristisch für den Verlauf des Ausgangssignals für Binärwerte 0 bzw. 1. Dabei ist jeweils zu unterscheiden, ob das Ausgangssignal zu Beginn der Erfassung einen Maximalwert oder einen Minimalwert hat. Eine Gerade mit einer konstanten positiven Steigung ähnelt daher einem Ausgangssignalverlauf, der dem Binärwert 0 entspricht und der mit einem negativen Spannungsimpuls beginnt. Eine Gerade mit negativer Steigung ähnelt einem Ausgangssignalverlauf mit Binärwert 0, der mit einem Maximalwert beginnt. Bei Binärwerten 1 tritt zwischen den Normierungszeitabständen ein weiterer Spannungsimpuls auf. Daher ähnelt eine Gerade in Form eines umgekehrten V einem Spannungsverlauf, der mit einem Minimalwert und eine Gerade in Form eines V einem Verlauf, der mit einem Maximalwert beginnt.

Die genannten Kurvenverläufe der Verlaufsmuster können bei Anwendung des Auswertungsverfahrens auf einem Digitalrechner mit geringem Programmieraufwand realisiert werden. Auch lassen sich bei solchen Verläufen die Abweichungen von dem tatsächlichen Ausgangssignalverlauf mit geringem Rechenaufwand feststellen, so daß die Auswertung nur kurze Zeit beansprucht.

In einer weiteren Ausgestaltung ist noch vorgesehen, daß die Abweichungen des zeitlichen Verlaufs des Ausgangssignals von dem Verlauf desjenigen Verlaufsmusters mit geringster Abweichung bestimmt werden, daß eine Korrektur des Verlaufsmusters abhängig von diesen Abweichungen erfolgt, und daß im weiteren Verlauf der Auswertung das korrigierte Verlaufsmuster mit dem Ausgangssignalverlauf verglichen sowie der Korrektur unterzogen wird.

Die Spannungsamplitude des Ausgangssignals des Wandlers kann wie bereits erwähnt gedämpft oder der Signalverlauf in seiner Kurvenform verändert sein. Gründe hierfür sind zum Beispiel der Abrieb des Wandlerkopfes, Verschmutzung, Änderung der magnetischen Feldstärke etc. Durch die Weiterbildung wird eine fortlaufende oder gleitende Anpassung der Verlaufsmuster an den tatsächlichen Verlauf des Ausgangssignals bewirkt. Dadurch wird erreicht, daß die Abweichung von Ausgangssignalverlauf und Verlaufsmuster mit geringster Abweichung minimal wird. Die Abweichungen bei anderen Verlaufsmustern bleiben unverändert, so daß der Störabstand zum Erkennen der Binärinformation vergrößert ist.

Bei dem erfindungsgemäßen Verfahren wird das Ausgangssignal des elektromagnetischen Wandlers zu vorgegebenen Zeitpunkten in Digitalwerte gewandelt, wobei die Digitalwerte in der Reihenfolge ihres Auftretens gespeichert werden. Zum Gewinnen der Informationen werden die gespeicherten Digitalwerte ausgewertet.

Diese Besonderheit des erfindungsgemäßen Verfahrens beruht auf der Überlegung, daß sich Auswertungsfehler vermeiden lassen, wenn die Auswertung der Spannungsimpulse zeitlich nicht eng mit deren Auftreten am Wandler verknüpft ist. Dann nämlich muß die Auswertung nicht in Echtzeit durchgeführt werden, sondern kann anhand der gespeicherten Digitalwerte zu einem späteren Zeitpunkt erfolgen, z.B. nach dem Abtasten der Magnetspur auf der Magnetkarte. Dadurch lassen sich die vorher beschriebenen Auswertungsvarianten sämtliche auf die von ein und derselben Magnetkarte herrührenden Spannungsimpulse anwenden und die Leistungsfähigkeit der verschiedenen Auswertungsverfahren miteinander vergleichen. Das erfindungsgemäße Verfahren kann dann eine längere Zeit für die Auswertung beanspruchen als für die Abtastung der Magnetspur erforderlich ist.

Wenn die Auswertung der Digitalwerte nacheinander durch unterschiedliche Auswertungsvarianten erfolgt, wird jeweils ein Satz binärer Informationen gewonnen. Derartige Auswertungsvarianten sind weiter oben beschrieben. Es können dann mehrere Sätze binärer Informationen untereinander verglichen werden und das Vergleichsergebnis einer Plausibilitätsprüfung unterzogen werden. Stimmen die Ergebnisse überein, so ist mit sehr großer Wahrscheinlichkeit anzunehmen, daß die gewonnenen Informationen wahr sind. Durch diese Maßnahme kann die Sicherheit und Zuverlässigkeit der Auswertung binärer Informationen nochweiter erhöht werden.

In weiterer Ausgestaltung der Erfindung wird für die weitere Auswertung der Digitalwerte abhängig vom Ergebnis der Plausibilitätsprüfung eine bestimmte Auswertungsvariante ausgewählt. Damit ist es möglich, für die gespeicherten Digitalwerte einer Magnetkarte die optimale Auswertungsvariante einzusetzen. Optimierungskriterien können z.B. der Zeitaufwand oder die statistische Sicherheit der Auswertung sein. Beispielsweise ist es möglich, die Auswertung bei einer typischen, eine bestimmte Verschmutzung aufweisenden Magnetkarte mehrstufig durchzuführen, wobei für jede Stufe eine andere Auswertungsvariante verwendet wird. In der ersten Stufe ist es dann zweckmäßig, ein einfaches, dafür aber schnelles Auswertungsverfahren einzusetzen. Führt dieses zu einem fehlerhaften Ergebnis, so wird die Auswertung in einer nachfolgenden zweiten Stufe unter Verwendung derselben Digitalwerte durch ein aufwendigeres und zuverlässigeres Auswertungsverfahren wiederholt. Die Auswertung wird in mehreren Stufen so lange fortgesetzt, bis ein einwandfreies Ergebnis vorliegt. Die Richtigkeit des Ergebnisses kann mittels bekannter Kontrollverfahren, z.B. dem Parity-Bit-Verfahren, festgestellt werden.

Ausführungsbeispiele der Erfindung werden im folgenden anhand der Zeichnung erläutert. Darin zeigt

Fig. 1     eine Magnetkarte mit einem vergrößerten Ausschnitt einer Magnetspur,

Fig. 2     ein Blockschaltbild einer Schaltungsanordnung zum Erfassen binärer Informationen,

Fig. 3     Signalverläufe und Binärzustände beim Zweifrequenzcode,

Fig. 4     ein Ablaufdiagramm zum Ermitteln von Zeitabständen bei der Normierung,

Fig. 5     Signalverläufe beim Auswerten binärer Informationen durch Feststellen der Art der Extremwerte in vorgegebenen Zeitabständen,

Fig. 6     ein Ablaufdiagramm zum Ermitteln der binären Informationen nach Fig. 5,

Fig. 6a     Signalverläufe bei einer Variante des Auswertungsverfahrens nach Fig. 5 und Fig. 6,

Fig. 7     Signalverläufe beim Auswerten binärer Informationen durch Zeitmessung,

Fig. 8     ein Ablaufschema der Verfahrensschritte zum Auswerten binärer Informationen nach Fig. 7,

Fig. 9     vier Verlaufsmuster und deren Abweichungen von einem vorgegebenen Ausgangssignalverlauf,

Fig. 10     drei weitere Ausgangssignalverläufe mit dazu passenden Verlaufsmustern,

Fig. 11     ein Ablaufdiagramm für Verfahrensschritte zum Auswerten binärer Informationen durch Vergleich mit Verlaufsmustern,

Fig. 12     ein korrigiertes Verlaufsmuster,

Fig. 13     ein Ablaufdiagramm zur Auswahl geeigneter Verlaufsmuster, und

Fig. 14     ein Ablaufdiagramm für ein Auswertungsverfahren, bei dem Korrelationskoeffizienten berechnet werden.

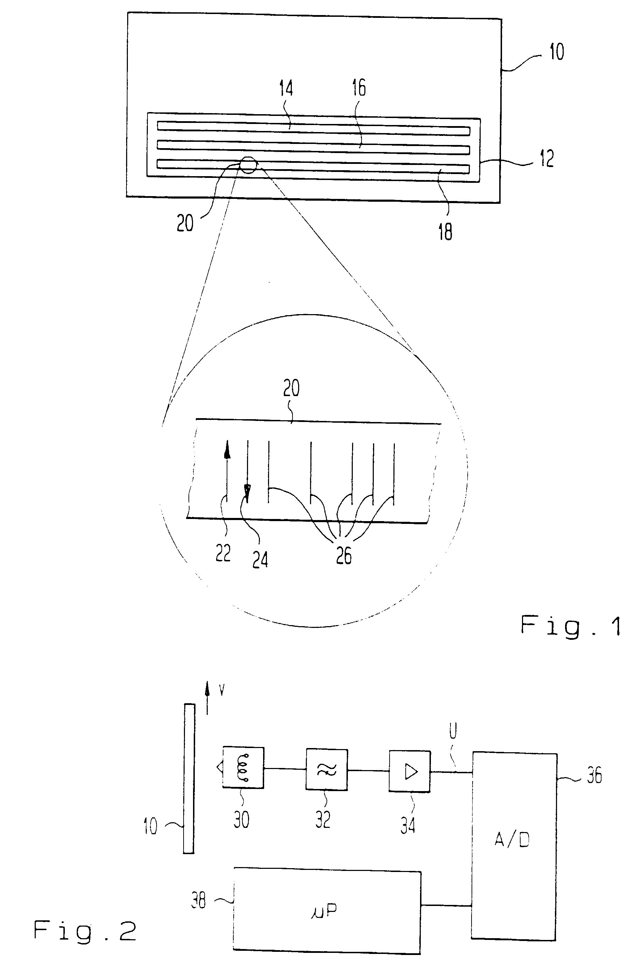

In Fig. 1 ist eine Magnetkarte 10 mit einem Magnetstreifen 12 dargestellt, auf dem sich drei Magnetspuren 14, 16, 18 befinden. Ein Abschnitt 20 der Magnetspur 18 ist vergrößert dargestellt. Der Magnetspur 20 sind strichmusterartig magnetische Flüsse 22, 24, 26 eingeprägt. Der Abstand zwischen den magnetischen Flüssen wird abhängig von der binären Information 0 oder 1 variiert. Aufeinander folgend e magnetische Flüsse haben jeweils entgegengesetzte Magnetisierungsrichtungen, angedeutet durch Pfeile bei den magnetischen Flüssen 22, 24. Deshalb werden die Magnetflüsse 22 bis 26 auch als Flußwechsel bezeichnet. Die Anzahl der Flußwechsel pro Millimeter wird als Flußwechseldichte d bezeichnet und ist ein Maß für die pro Längeneinheit speicherbaren Binärwerte.

Fig. 2 zeigt in einer Blockdarstellung eine Schaltungsanordnung zum Erfassen der auf der Magnetkarte 10 gespeicherten Information. Die Magnetkarte 10 wird mit einer Geschwindigkeit v an einem elektromagnetischen Wandler 30 vorbeigeführt, so daß infolge der vom Wandler 30 erfaßten Magnetflußänderungen in seiner Spule Spannungsimpulse induziert werden, die in einem Tiefpaßfilter 32 gefiltert werden. Das vom Filter 32 abgegebene Signal wird durch einen Verstärker 34 zum Ausgangssignal U verstärkt. Dieses wird in regelmäßig vorgegebenen Zeitpunkten von einem A/D-Wandler 36 in Digitalwerte gewandelt. Die Digitalwerte des Wandlers 36 werden einem Mikroprozessor 38 zugeführt, der die Verfahrensschritte zum Auswerten der Binärinformationen durchführt.

Die Impulsfolgefrequenz der Spannungsimpulse am Wandler 30 hängt von der Flußwechseldichte d der Magnetspur und von der Relativgeschwindigkeit v zwischen Wandler 30 und Magnetkarte 10 ab. Um den Verlauf des Ausgangssignals U des Wandlers 30 mit möglichst hoher zeitlicher Auflösung zu erfassen, beträgt die Abtastfrequenz des A/D-Wandlers mindestens das 16-fache der maximalen Impulsfolgefrequenz. Die Zeitpunkte für die A/D-Wandlung haben demgemäß einen Abstand $Tad < (16vd)^{-1}$. Bei einer Relativgeschwindigkeit von 200 mm/s und einer Flußwechseldichte d von 8,33/mm beträgt die Abtastfrequenz 26656 Hz bzw. der Zeitabstand Tad 37,5µs.

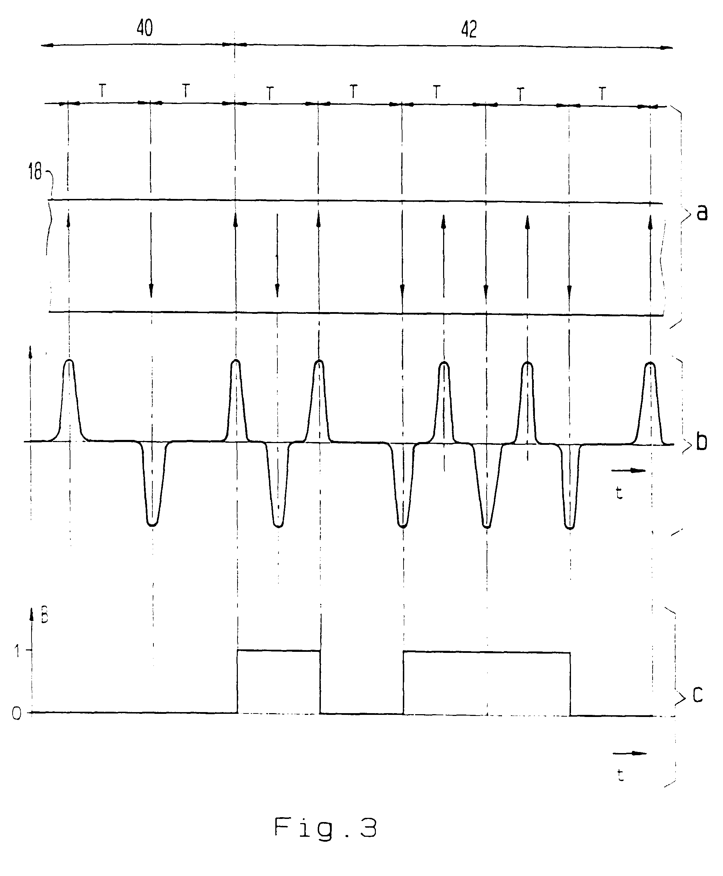

In Fig. 3 sind in einem Bildteil a) Flußwechsel der Magnetspur 18 dargestellt. Im Bildteil b) ist der Verlauf der vom Wandler 30 abgegebenen Spannung U über der Zeit t beim Abtasten dieser Flußwechsel dargestellt. Im unteren Bildteil c) sind Binärzustände B über der Zeit t angegeben, die aus dem Spannungsverlauf U ermittelt werden.

Die Magnetspur 18 hat einen sogenannten Vornullenbereich 40, in welchem nur Flußwechsel eingeprägt sind, die dem Binärwert 0 entsprechen. An den Vornullenbereich 40 schließt sich der eigentliche Informationsbereich 42 an, der als Informationen Binärwerte 0 und 1 enthält.

Die Verschlüsselung der Informationen erfolgt nach dem Zweifrequenzcode. Bei diesem wechseln sich die Magnetisierungsrichtungen aufeinander folgend er Magnetflüsse ab. In vorgegebenen Wegabständen, die Zeitabständen T bei der Abtastung entsprechen, sind jeweils ein Flußwechsel vorgesehen. Wenn innerhalb eines Abstandes T ein weiterer Flußwechsel vorkommt, so signalisiert dies den Binärwert 1 - fehlt dieser Flußwechsel, so signalisiert dies den Binärwert 0. Beim Abtasten der Flußwechsel werden abhängig von der Magnetisierungsrichtung positive oder negative Spannungsimpulse induziert, deren Verläufe im Bildteil b) der Fig. 3 dargestellt sind. Enthält die Magnetspur 18 lediglich Informationen mit dem Binärwert 0, so treten die Spannungsimpulse mit nur einer Frequenz bzw. einer Periode T auf. Sind in der Magnetspur 18 auch Binärwerte 1 gespeichert, so enthält der Signalverlauf auch Signalanteile mit der doppelten Frequenz bzw. der halben Periodendauer T. Im Bildteil c sind die in den vorgegebenen Wegabständen, die den Zeitabständen T entsprechen, enthaltenen Binärwerte B dargestellt. Die Binärwerte stehen jeweils erst nach einem Extremwertwechsel fest.

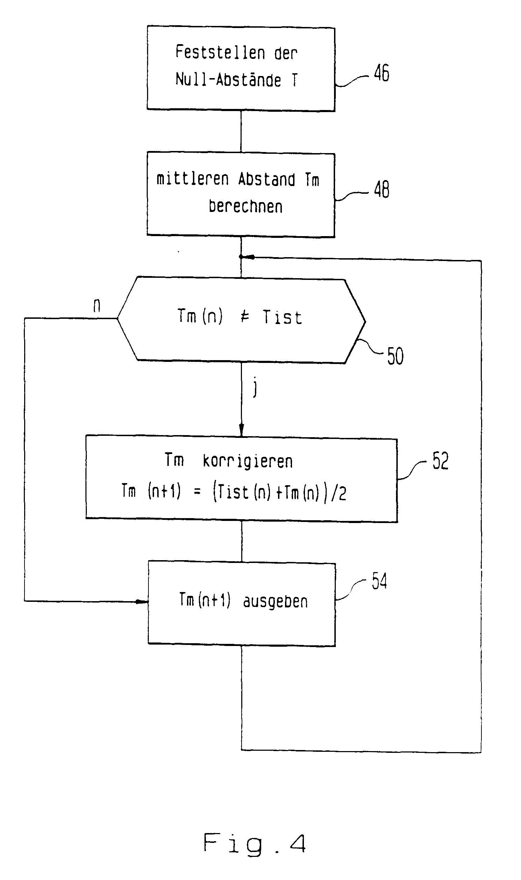

Da nicht immer sichergestellt ist, daß die Relativgeschwindigkeit v zwischen Wandler 30 und Magnetkarte 10 für alle Magnetkartenlesegeräte gleich ist, ist es erforderlich, eine Normierung durchzuführen, bei der die Periode T zu bestimmen ist. Hierzu dient der Vornullenbereich 40, der zu Beginn eines Abtastvorganges abgetastet wird. Aus den zeitlichen Abständen der Spannungsimpulse des Vornullenbereichs 40 kann der dem Binärwert 0 zugeordnete Zeitabstand T ermittelt werden. Die hierzu erforderlichen Verfahrensschritte sind in einem Ablaufdiagramm in Fig. 4 dargestellt.

In einem ersten Verfahrensschritt 46 werden die Zeitabstände T für die binäre Information 0 durch Zeitmessung ermittelt. Hierzu können beispielsweise die vom A/D-Wandler 36 abgegebenen Digitalwerte auf Extremwerte analysiert werden. Bei einer festen Abtastfrequenz des A/D-Wandlers 36 ist die Zahl der zwischen den Extremwerten liegenden Digitalwerte ein Maß für den gesuchten Zeitabstand T.

Im Verfahrensschritt 48 werden aus mehreren Zeitabständen T des Vornullenbereichs 40 ein mittlerer Zeitabstand Tm berechnet. Dadurch werden Zeitmeßfehler ausgemittelt. Die weiteren Verfahrensschritte 50, 52, 54 beziehen sich auf eine Korrektur des mittleren Zeitstandes Tm, die erforderlich ist, wenn im Verlaufe des Abtastens der Magnetspur 18 die Abtastgeschwindigkeit schwankt. Hierzu werden wie noch beschrieben wird während des Abtastvorgangs fortlaufend die Zeitabstände Tist für binäre 0-Werte bestimmt und der für die Auswertung benötigte Zeitabstand Tm fortlaufend korrigiert. Im Verfahrensschritt 50 wird der Zeitabstand Tm beim n-ten Auswertungsschritt mit dem aktuellen Zeitabstand Tist verglichen und bei Abweichungen voneinander zum Schritt 52 verzweigt. In diesem wird durch eine arithmetische Mittelwertbildung der Zeitabstand Tm für den nächsten Auswertungsschritt n+1 gemäß der beim Verfahrensschritt 52 angegebenen Beziehung ermittelt. Das Ergebnis dieser Korrektur wird dann im Verfahrensschritt 54 anderen an der Auswertung beteiligten Verfahrensabläufen übergeben und für die weitere Auswertung der Informationen verwendet. Nach der Korrektur wird zum Verfahrensschritt 50 weitergeleitet und der Zeitabstand Tm im weiteren Verlauf weiter korrigiert.

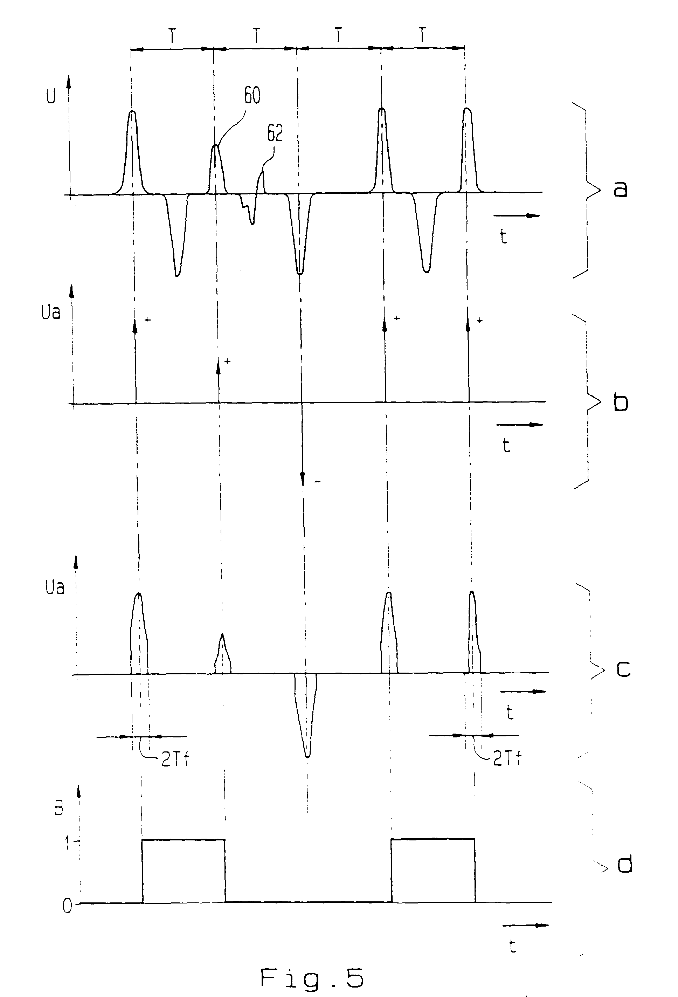

In Fig. 5 sind über der Zeit t verschiedene Signalverläufe dargestellt, anhand der das Auswertungsverfahren durch Feststellen der Art der Extremwerte in vorgegebenen Zeitabständen beschrieben wird. Im Bildteil a) ist der Ausgangsspannungsverlauf U des Wandlers 30 dargestellt. In durch die Normierung vorgegebenen Zeitabständen T wird der Spannungsverlauf U abschnittsweise in seinem Extremwert abgetastet und die Art des Extremwertes, d.h. Maximalwert oder Minimalwert, ermittelt. Dies kann zum Beispiel durch einfaches Auswerten des Vorzeichens des Spannungswertes geschehen, wie dies im Bildteil b) angedeutet ist. Zur Informationsgewinnung wird die Art aufeinander folgender Extremwerte miteinander verglichen. Sind die Extremwerte gleichartig, so wird der Binärwert 1 erzeugt (Bildteil d) in Fig. 5). Sind die Extremwerte verschiedenartig, so wird der Binärwert 0 erzeugt. Da der Signalverlauf U nur in Zeitabständen T abgetastet wird, wird ein zwischen zwei Abtastvorgängen auftretender Störimpuls 62 nicht erfaßt und kann die Auswertung nicht beeinflussen. Auch die Höhe der Spannungsamplitude im Moment des Abtastens ist ohne Einfluß auf das Auswertungsergebnis, denn die in einem abgeschwächten Spannungsimpuls 60 noch enthaltene Information über die Art des Extremwerts reicht zum Feststellen des binären Werts 0 oder 1 aus.

Im Bildteil c) der Fig. 5 wird der Erfassungsvorgang in einem Zeitabschnitt 2Tf durchgeführt. Entsprechend der Abtastfrequenz des A/D-Wandlers 36 werden während des Zeitabschnitts 2Tf mehrere Digitalwerte ermittelt und unter diesen der Extremwert festgestellt. Dadurch wird es möglich, nicht nur die Art des Extremwerts, sondern auch seine zeitliche Lage festzustellen. Dies kann für die Zeitmessung des aktuellen Zeitstandes Tist zum vorangegangenen Extremwert ausgenutzt werden. Der Zeitabstand Tist kann dann wie beschrieben zur Korrektur des Zeitabstandes T bzw. des mittleren Zeitabstandes Tm verwendet werden.

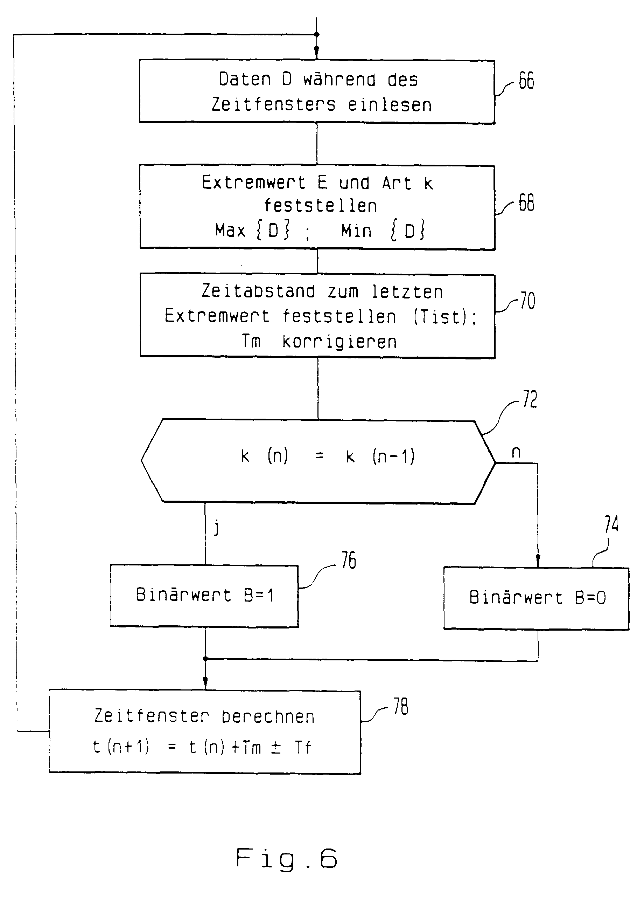

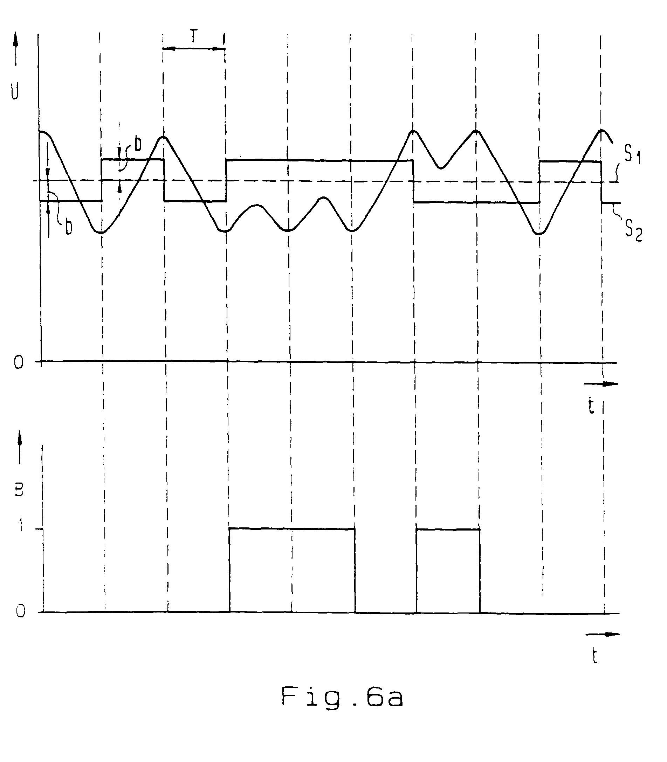

In Fig. 6 sind die zum Ermitteln der Binärwerte nach Fig. 5 erforderlichen Verfahrensschritte in einem Ablaufdiagramm angegeben. Im ersten Verfahrensschritt 66 werden Daten D, die in einen Zeitabschnitt oder in ein Zeitfenster 2Tf fallen, in den Mikroprozessor 38 eingelesen. Daraufhin wird der Maximal- bzw. der Minimalwert dieser Daten festgestellt (Verfahrensschritt 68). Aus der zeitlichen Lage des Extremwertes kann der Zeitabstand Tist zum letzten Extremwert berechnet werden (Verfahrensschritt 70). Dieser Zeitabstand Tist wird zur Korrektur des mittleren Zeitabstandes Tm nach Fig. 4 verwendet.

Im nächsten Verfahrensschritt 72 wird die Art des aktuellen Extremwerts bestimmt und mit der des vorherigen Extremwerts verglichen. Bei Übereinstimmung wird als Information der Binärwert 1 ausgegeben, bei fehlender Übereinstimmung der Binärwert 0 (Verfahrensschritt 76 bzw. 74). Anschließend werden im Verfahrensschritt 78 die Zeitpunkte t(n+1) des nächsten Zeitfensters berechnet. Diese liegen symmetrisch im Abstand ± Tf zum nächsten Zeitpunkt t(n)+Tm.

In Fig. 6a wird eine Variante der Auswertung durch Feststellen der Art der Extremwerte in vorgegebenen Zeitabständen T anhand von Kurvenverläufen wiedergegeben. Im oberen Bildteil ist der Ausgangsspannungsverlauf U des Wandlers 30 dargestellt, wie er beim Abtasten von stark verschmutzten oder teilweise beschädigten Magnetkarten erzeugt wird. Für Prüfzwecke kann ein derartiger Spannungsverlauf durch Bekleben der Magnetspur mit einem Tesafilmstreifen simuliert werden.

Charakteristisch für diesen Ausgangsspannungsverlauf U sind die verkleinerten Spannungsamplituden der Flußwechsel mit halbem Zeitabstand T, die Binärwerte 1 repräsentieren. Diese Amplitudenverringerung rührt von der verringerten Empfindlichkeit des Wandlers 30 bei vergrößertem Abstand zur Magnetspur her. Die Abtastung des Ausgangsspannungsverlaufs U im Zeitabstand T und das Gewinnen der binären Information aus den Extremwerten erfolgt dem Prinzip nach in gleicher Weise wie vorher bei Fig. 5 und 6 beschrieben. Abweichend von der in Fig. 5 dargestellten Ausgangsspannung U ist diese um einen konstanten Betrag angehoben, so daß nur positive Spannungswerte im Spannungsverlauf U vorliegen. Zum Feststellen der Art der Extremwerte werden diese mit einem Schwellwert verglichen, wie nachfolgend beschrieben wird.

Der Schwellwert wird im einfachsten Fall durch arithmetische Mittelwertbildung des Ausgangsspannungsverlaufs U ermittelt, beispielsweise in der Normierungsphase, bei der als Vorinformationen Binärwerte 0 mit definierter Spannungsamplitude vorliegen. Ein derartiger Schwellwert S1 ist im oberen Bildteil der Fig. 6a gestrichelt eingezeichnet. Die Art des Extremwertes wird, wie bereits erwähnt, durch Vergleich mit diesem Schwellwert S1 ermittelt. Ein Maximalwert liegt vor, wenn der Extremwert kleiner als der Schwellwert S1 ist. Aus dem Verhältnis der Art des festgestellten Extremwerts zur Art des zuvor festgestellten Extremwerts werden dann, wie zuvor bei Fig. 5 und 6 beschrieben, die binären Informationen B gewonnen. Deren zeitlicher Verlauf ist im unteren Bildteil der Fig. 6a dargestellt.

Um den Störabstand beim Feststellen der Art des Extremwertes noch weiter zu erhöhen, kann der Schwellwert S1 nach einem festgestellten Extremwertwechsel um einen Betrag b geändert werden, der den Spannungsabstand zum zuletzt festgestellten Extremwert erhöht. Bei Anwendung dieses Prinzips ergibt sich der im oberen Bildteil mit S2 gekennzeichnete Verlauf des Schwellwertes. Wie aus dem Ausgangsspannungsverlauf U nach der Fig. 6a ersichtlich ist, wird damit der vertikale Abstand zwischen den Spannungsamplituden mit halbem Zeitabstand T und dem Schwellwert S2 um den Betrag b vergrößert. Die Art des Extremwerts, d.h. Minimum oder Maximum, kann auf diese Weise mit hoher Zuverlässigkeit auch bei kleinen Extremwerten festgestellt werden.

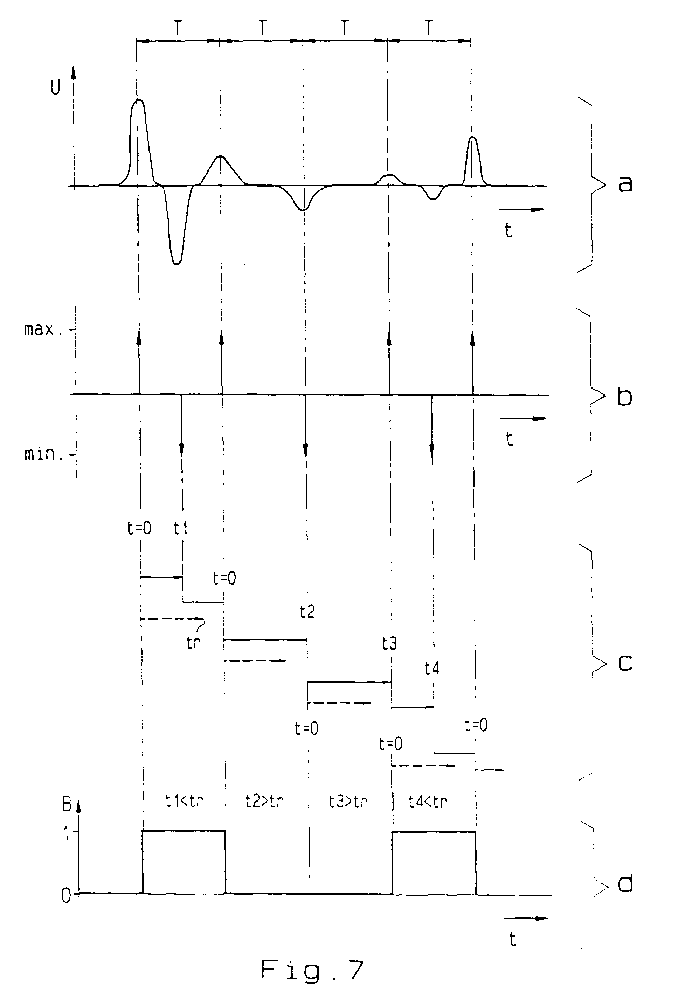

Eine weitere Art der Auswertung binärer Informationen, die im Ausgangssignalverlauf U des Wandlers 30 enthalten sind, wird im folgenden anhand der Fig. 7 beschrieben. Im Bildteil a) ist der Ausgangssignalverlauf U über der Zeit t dargestellt, dessen Spannungsimpulse zum Teil stark abgeschwächt sind. Dies kann beispielsweise eine Folge von Abstandsschwankungen zwischen Wandler 30 und Magnetkarte 10, hervorgerufen durch Schmutz auf der Magnetkarte 10 oder durch Welligkeiten, sein. Zur Informationsauswertung werden aufeinanderfolgende Extremwerte unterschiedlicher Art festgestellt. Die zeitliche Lage dieser Extremwerte ist im Bildteil b) dargestellt. Da bei der Extremwertbildung lediglich ein Vergleich zwischen einander benachbarten Werten durchgeführt wird, ist das Ergebnis unabhängig vom Absolutbetrag der Spannung des Ausgangssignals U. Dies bedeutet, daß die Abschwächung der Spannungsamplituden infolge von Störeinwirkungen ohne Auswirkung auf die Informationsauswertung ist.

Anhand der Bildteile c) und d) ist die Informationsgewinnung durch Zeitvergleich dargestellt. Mit dem Feststellen eines Extremwerts wird zum Zeitpunkt t=0 eine Zeitmessung gestartet und die Zeit t1 bis zum Eintreffen des nächsten Extremwertes anderer Art gemessen. Diese Zeit t1 wird mit einer Referenzzeit tr verglichen, die das 0,7-fache eines Zeitabstandes T oder Tm beträgt, der bei der Normierung ermittelt worden ist. Wenn die Zeit t1 kleiner als die Referenzzeit tr ist, so wird der Binärwert 1 erzeugt (Bildteil d) in Fig. 7). Anschließend wird der nächste Extremwert festgestellt und bei diesem erneut eine Zeitmessung gestartet. Der nachfolgende Extremwert hat in diesem Beispiel einen zeitlichen Abstand t2 zum vorhergehenden Extremwert. Die Zeit t2 ist größer als die Referenzzeit tr, als Information wird dementsprechend der Binärwert 0 erkannt. Mit dem Beenden der Zeitmessung für einen Binärwert 0 wird sogleich eine neue Zeitmessung gestartet.

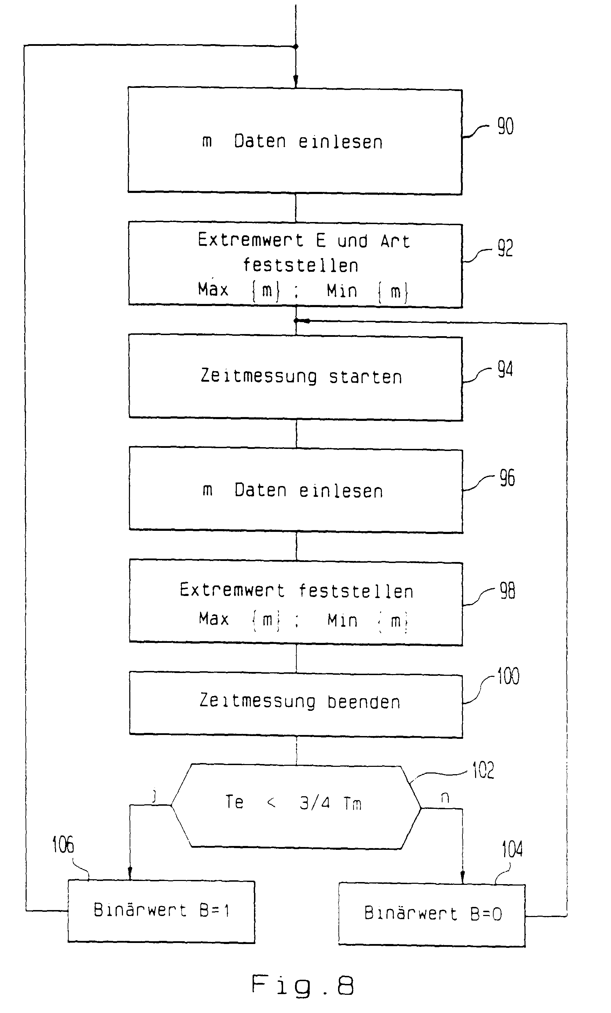

Die zum Auswerten der binären Informationen erforderlichen Verfahrensschritte nach diesem Verfahren sind in Fig. 8 in einem Ablaufdiagramm dargestellt. In einem ersten Schritt 90 werden m digitalisierte Daten des Ausgangssignalverlaufs U in den Mikroprozessor 38 eingelesen. Die Zahl m wird so gewählt, daß unter den m Digitalwerten mindestens ein Wert ist, der einen Spannungsimpuls und damit einen Extremwert des Signalverlaufs U abbildet. Im nachfolgenden Verfahrensschritt 92 wird unter den m Daten ein Extremwert festgestellt und die Zeitmessung gestartet (Verfahrensschritt 94). Daraufhin werden weitere m Daten eingelesen und der nachfolgende Extremwert festgestellt (Verfahrensschritte 96 und 98). Mit dem Feststellen eines Extremwerts wird im nachfolgenden Schritt 100 die Zeitmessung beendet. Da bei diesem Beispiel ein digitales Verfahren mit einer konstanten Wandlungsfrequenz bei der A/D-Wandlung verwendet wird, kann die Zeitmessung auf ein Feststellen der Zahl der zwischen zwei Extremwerten liegenden Digitalwerte zurückgeführt werden. Diese Zahl ist dann mit dem Zeitabstand Tad zwischen zwei Digitalwandlungen zu multiplizieren, um den Absolutwert des Zeitabstands zu ermitteln. Die Zeitmessung muß beim Digitalverfahren nicht zeitgleich mit dem Erzeugen des Ausgangssignalverlaufs U stattfinden, sondern kann zeitversetzt anhand gespeicherter Werte vorgenommen werden.

Die gemessene Zeit wird mit einem Referenzwert tr verglichen, der das 0,7-fache des mittleren Zeitabstandes Tm beträgt (Verfahrensschritt 102). Wenn die gemessene Zeit größer als die Referenzzeit tr ist, so wird im Schritt 104 der Binärwert B = 0 ausgegeben und anschließend zum Verfahrensschritt 94 verzweigt, bei dem eine neue Zeitmessung gestartet wird. Ist die gemessene Zeit kleiner als der Referenzwert tr, so wird im Verfahrensschritt 106 der Binärwert B = 1 erzeugt und anschließend der nachfolgende Extremwert festgestellt (Verfahrensschritte 90 und 92). Erst dann wird eine weitere Zeitmessung gestartet.

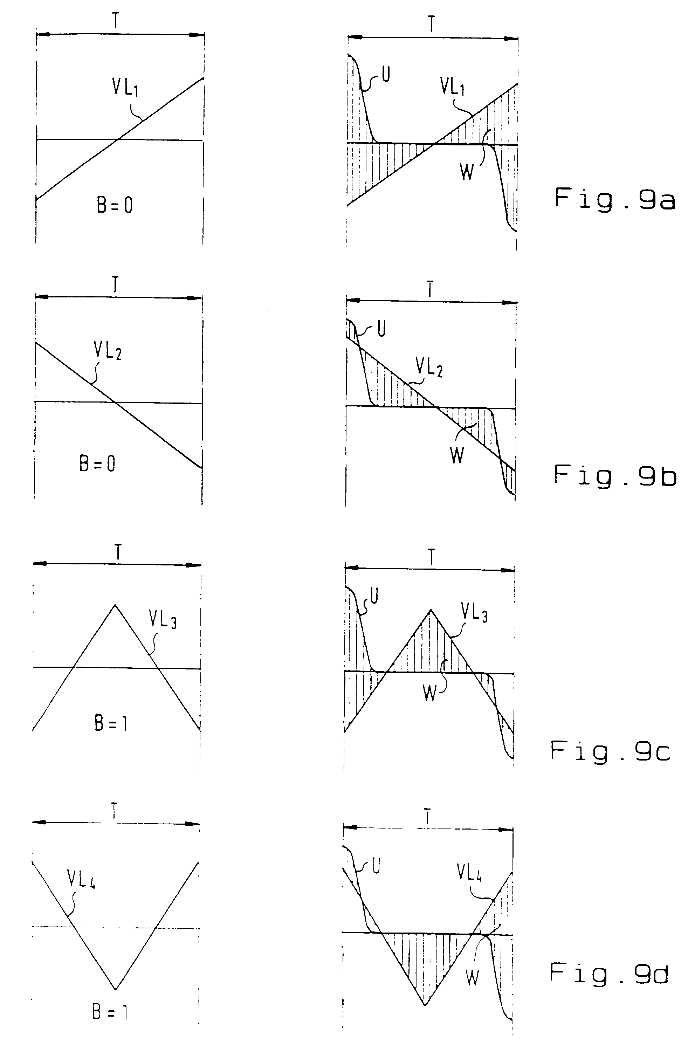

Bei einem weiteren Auswertungsverfahren wird der zeitliche Verlauf des Ausgangssignals U mit Verlaufsmustern verglichen. Solche Verlaufsmuster sind in der Fig. 9 wiedergegeben. Im Bildteil a) ist links ein Verlaufsmuster $VL_1$ dargestellt, das durch eine Gerade mit konstanter positiver Steigung innerhalb eines Zeitabschnitts T gebildet wird, der dem bei der Normierung ermittelten Zeitabstand entspricht. Im Bildteil a) ist rechts das Verlaufsmuster $VL_1$ zusammen mit dem Ausgangssignalverlauf U in ein Diagramm eingezeichnet. Die Abweichungen zwischen den Verläufen des Ausgangssignals U und dem Verlaufsmuster $VL_1$ sind schraffiert dargestellt. Die Summe der Abweichungen entspricht der schraffierten Fläche W.

Im Bildteil b) ist links als Verlaufsmuster $VL_2$ eine Gerade mit konstanter negativer Steigung dargestellt. Im Diagramm rechts ist die Summe der Abweichungen des Verlaufsmusters $VL_2$ vom Ausgangssignalverlauf U als Fläche W gekennzeichnet. Das Verlaufsmuster $VL_2$ hat die charakteristische Form des Ausgangssignalverlaufs U eines Binärwerts 0, da es mit einem positiven Wert (Maximalwert) beginnt und mit einem negativen Wert (Minimalwert) endet. Entsprechendes gilt für das Verlaufsmuster $VL_1$, jedoch mit umgekehrten Vorzeichen. Die Verlaufsmuster $VL_3$ und $VL_4$ in den Bildteilen c) und d) geben die charakteristische Form des Ausgangssignalverlaufs U für einen Binärwert 1 wieder, wobei einem Extremwert erster Art ein Extremwert anderer Art und darauf wieder ein Extremwert erster Art folgt. Beim Verlaufsmuster $VL_3$ ist der Extremwert erster Art ein Minimalwert, beim Verlaufsmuster $VL_4$ ein Maximalwert. Aus der Fig. 9 ergibt sich, daß die Abweichung W beim Vergleich des Verlaufsmusters $VL_2$ mit dem Ausgangssignalverlauf U (Bildteil b) in Fig. 9) den kleinsten Wert hat. Demgemäß entspricht der Ausgangssignalverlauf U innerhalb des betrachteten Zeitabschnitts T dem Binärwert B = 0.

Als Abweichung W ist in diesem Beispiel die Fläche zwischen den Kurvenverläufen des Spannungssignals U und den Verlaufsmustern $VL_1$ bis $VL_4$ verwendet worden. Diese Fläche W kann durch Aufsummierung oder Integralbildung aller Betragsabweichungen gewonnen werden. Aus diesen Abweichungen kann ein mittlerer Wert gebildet werden, der ein standardisiertes Maß für die Ähnlichkeit zwischen dem Verlauf des Ausgangssignals U und dem Verlauf der Verlaufsmuster $VL_1$ bis $VL_4$ angibt. Ensprechend kann auch eine mittlere quadratische Abweichung der Verläufe gebildet werden, bei dem die Abweichungen quadriert, aufsummiert und ein Mittelwert berechnet wird. Mit Hilfe der mittleren quadratischen Abweichung und/oder der mittleren Betragsabweichung können statistische Betrachtungen über die Veränderung der Kurvenform des Ausgangssignals U angestellt werden. Dadurch können kurz- und langzeitige Änderungen des Kurvenverlaufs, die z.B. auf einen systematischen Störeinfluß zurückzuführen sind, erkannt werden.

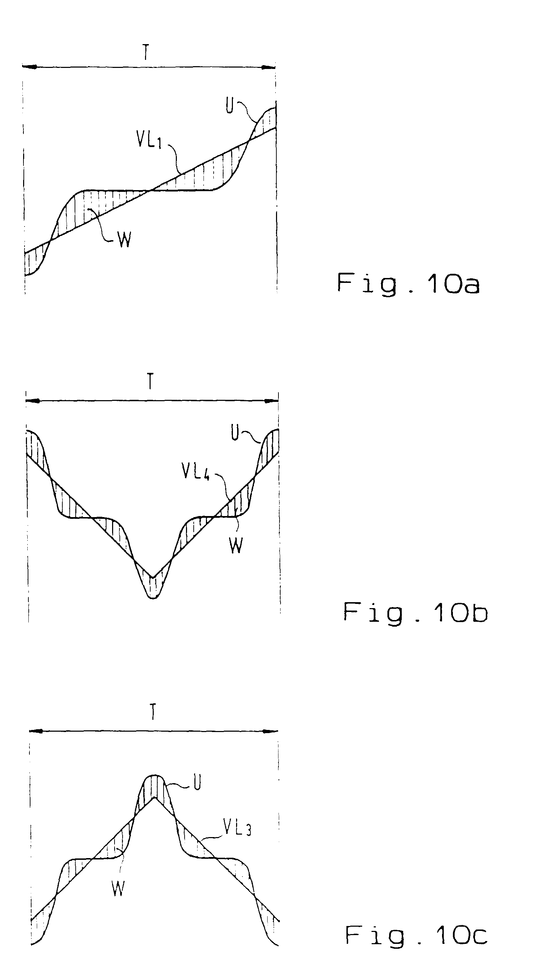

In Fig. 10 sind drei Diagramme dargestellt, die die beste Übereinstimmung zwischen je einem der vier Verlaufsmuster und verschiedenen Variationen des Ausgangssignalverlaufs U wiedergeben. Im Bildteil a) ist dies für das Verlaufsmuster $VL_1$ für den Binärwert 0 dargestellt. Im Bildteil b) ergibt der Vergleich des Verlaufsmusters $VL_4$ mit dem dargestellten Ausgangssignalverlauf U die minimale Abweichung W. Dem Ausgangssignalverlauf U wird daher der dem Verlaufsmuster $VL_4$ entsprechende Binärwert 1 zugeordnet. Analoges gilt auch für den Vergleich gemäß Bildteil c), bei dem im Unterschied zum Bildteil b) der Ausgangssignalverlauf U mit einem negativen Spannungswert beginnt.

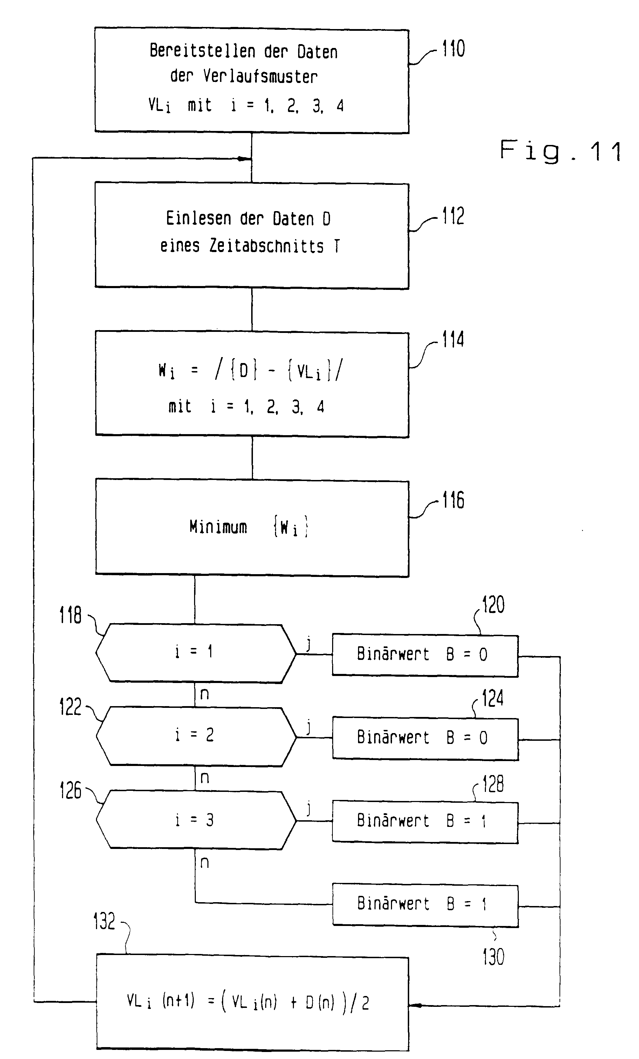

In Fig. 11 sind in einem Ablaufschema die zum Erkennen der Information durch Vergleich mit Verlaufsmustern erforderlichen Verfahrensschritte dargestellt. Im Schritt 110 werden zunächst die Daten der Verlaufsmuster in einem Datenfeld bereitgestellt. Anschließend werden im Verfahrensschritt 112 die Daten des Ausgangssignals U eines Zeitabschnitts T in den Mikroprozessor 38 eingelesen. Im Schritt 114 werden diese Daten mit den Daten der Verlaufsmuster $VL_i$ verglichen, d. h. es werden die Betragsabweichungen bzw. die quadratischen Abweichungen $W_i$ mit i= 1, 2, 3, 4 ermittelt. Im nachfolgenden Schritt 116 wird der Minimalwert unter den vier Abweichungen $W_i$ festgestellt. Das entsprechende Verlaufsmuster $VL_i$ hat die größte Ähnlichkeit mit dem tatsächlichen Kurvenverlauf des Ausgangssignals U. In den Verfahrensschritten 118 bis 130 wird sodann der Binärwert ausgegeben, der dem festgestellten Verlaufsmuster $VL_1$ bis $VL_4$ zugeordnet ist.

Anschließend wird in einem Verfahrensschritt 132 das festgestellte Verlaufsmuster $VL_i$ korrigiert. Hierzu werden die Abweichungen der Daten des Verlaufsmusters $VL_i$ von den tatsächlichen Daten D des Ausgangssignals U ermittelt, und die aktuellen Daten des Verlaufsmusters $VL_i$ um die Hälfte dieser Abweichungen korrigiert. Im weiteren Verlauf der Informationsauswertung wird das so gewonnene korrigierte Verlaufsmuster $VL_i$ fortlaufend weiter korrigiert, so daß sich sein Verlauf immer mehr dem tatsächlichen Verlauf des Ausgangssignals U annähert. Dadurch werden die Abweichungen $W_i$ von zueinander passenden Verläufen des Ausgangssignals U und des jeweiligen Verlaufsmusters $VL_i$

minimiert und damit die Sicherheit der Entscheidung für eines der Verlaufsmuster $VL_i$ beim Vergleich erhöht.

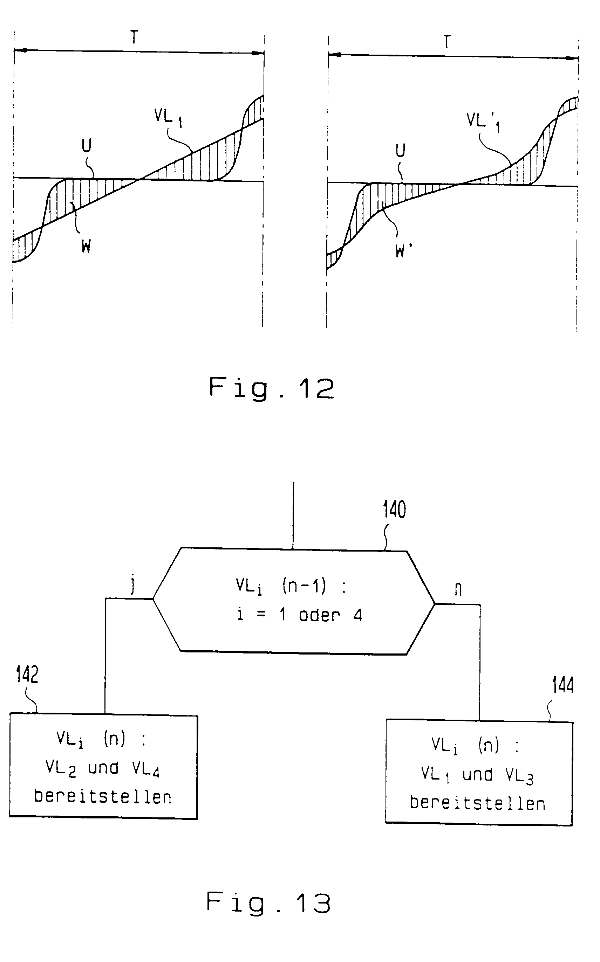

Die Auswirkungen dieser Korrektur sind in Fig. 12 dargestellt. Im linken Bildteil wird das Verlaufsmuster $VL_1$ durch eine Gerade mit positiver Steigung gebildet. Durch Korrektur der Gerade um die Hälfte der Abweichungen des Verlaufsmusters $VL_1$ vom Ausgangssignalverlauf U entsteht ein Verlaufsmuster $VL_1'$ (Bild rechts), das sich dem tatsächlichen Verlauf des Ausgangssignals U besser anschmiegt. Dementsprechend ist die Abweichung W' vom Ausgangsspannungsverlauf U kleiner als die im Bild links.

Bei einer Variante der Auswertung durch Vergleich mit Verlaufsmustern kann die Wahl der Verlaufsmuster abhängig von dem zuvor festgestellten Ausgangssignalverlauf U erfolgen. Hierbei wird die Erkenntnis genutzt, daß der Signalverlauf aufeinander folgender Verlaufsabschnitte annähernd stetig ist. Praktisch bedeutet dies, daß auf einen Ausgangssignalverlauf U gemäß Bildteil a) in Fig. 10 zwar ein Abschnitt des Spannungssignalverlaufs U mit einem Binärwert 1 gemäß dem Bildteil b) folgen kann, jedoch nicht ein Signalverlauf U gemäß dem Bildteil c). Entsprechendes gilt für Signalverläufe U mit Binärwert 0, d.h. auf den Spannungsverlauf gemäß Bildteil a) kann nur ein Spannungsverlauf U mit zu Beginn positiver Spannung folgen. Demgemäß kann der auf einen bereits ausgewerteten Spannungsverlauf U folgende Vergleich mit einem Verlaufsmuster $VL_1$ bis $VL_4$ auf diejenigen Muster beschränkt werden, die an den letzten Spannungswert des letzten Zeitabschnitts T angepaßt sind.

Die entsprechenden Verfahrensschritte zum Auswählen der geeigneten Verlaufsmuster sind dem Ablaufschema nach Fig. 13 zu entnehmen. In einem ersten Vergleichsschritt 140 wird abhängig vom beim vorherigen Vergleich n-1 festgestellten Verlaufsmuster $VL_i$ verzweigt. Wenn zuvor das Muster $VL_1$ oder $VL_4$ als passend festgestellt worden ist, dann werden für den folgenden Vergleich n im Verfahrensschritt 142 die Verlaufsmuster $VL_2$ und $VL_4$ bereitgestellt. Anderenfalls werden die Verlaufsmuster $VL_1$ und $VL_3$ für den Vergleich verwendet (Verfahrensschritt 144). Durch die Vorauswahl geeigneter Verlaufsmuster $VL_i$ wird die Zahl der durchzuführenden Vergleiche reduziert und damit die Informationsauswertung beschleunigt.

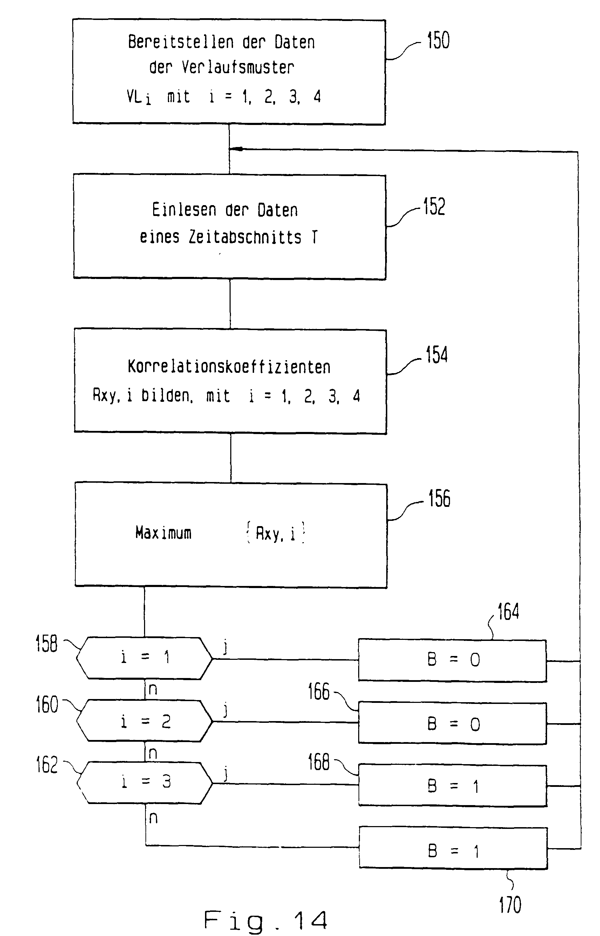

In Fig. 14 ist eine weitere Variante der Ermittlung binärer Informationen durch Vergleich mit Verlaufsmustern in einem Ablaufschema dargestellt. Bei dieser Variante werden zum Feststellen der Ähnlichkeit zwischen dem Istverlauf der Ausgangsspannung U in einem Zeitabschnitt T und den Verlaufsmustern VLi Korrelationskoeffizienten Rxy,i gebildet. Heirzu werden in einem ersten Verfahrensschritt 150 die Daten der Verlaufsmuster VLi in einem Datenfeld bereitgestellt. Im nächsten Verfahrensschritt 152 werden die Daten des Ausgangssignals U eines betrachteten Zeitabschnitts T in den Mikroprozessor 38 eingelesen.

Im darauf folgenden Schritt 154 werden aus den Daten der vier Verlausmuster VLi und den Daten des Ausgangssignals U jeweils ein normierter Korrelationskoeffizienten Rxy,i mit i = 1,2,3,4 nach der Formel

$$Rxy, i = \frac{(x_k\text{-}x)\ (y_k\text{-}y)}{(x_k\text{-}x)^2\ (y_k\text{-}y)^2}$$

gebildet. Darin sind

$x_k$      Daten des Verlaufsmusters VLi mit der Laufvariable k,

$x$      der Mittelwert über alle Werte $x_k$,

$y_k$      Daten des Ausgangssignals U,

$y$      der Mittelwert über alle Werte $y_k$,

$k$      die Laufvariable von 1 bis n, mit n dem größten Wert der Laufvariable k.

Die so ermittelten Korrelationskoeffizienten Rxy,i haben einen Wertebreich von -1 bis +1. Der Wert +1 kennzeichnet die völlige Übereinstimmung des Ausgangsspannungsverlaufs mit dem betreffenden Verlaufsmuster VLi. Der Wert -1 kennzeichnet die völlige Gegenläufigkeit von Spannungsverlauf U und Verlauf des Verlaufsmusters VLi. In der Praxis wird der berechnete Korrelationskoeffizient Rxy im allgemeinen zwischen diesen Extremwerten liegen. Dasjenige Verlaufsmuster VLi mit einem Korrelationskoeffizienten Rxy, der dem Wert +1 am nächsten kommt, ist unter den betrachteten vier Verlaufsmustern VL1 bis VL4 dem Kurvenverlauf der Ausgangsspannung U am ähnlichsten. Der zu diesem Verlaufsmuster $VL_i$ gehörende Binärwert B wird dann als gültiger Binärwert B ausgegeben.

Die Bildung des Maximalwerts aus den vier Korrelationskoeffizienten Rxy,i erfolgt im Verfahrensschritt 156. In den darauf folgenden Schritten 158 bis 170 wird der zum Verlaufsmuster VLi mit maximalem Koeffizienten Rxy gehörende Binärwert B ausgegeben. Anschließend wird zum Verfahrensschritt 152 verzweigt und die Auswertungsprozedur auf den nächsten Zeitabschnitt T angewendet. Selbstverständlich können bei der Auswertung durch Korrelationskoeffizientenvergleich auch die in den Fig. 11, 12 und 13 dargestellten und weiter oben beschriebenen Verfahrensschritte der Korrektur der Verlaufsmuster VLi sowie der Auswahl der Verlaufsmuster VLi angewendet werden.

**Patentansprüche**

1. Verfahren zum Auswerten binärer Informationen, die auf der Magnetspur einer Magnetspeicherkarte in Form von Flußwechseln nach dem Zweifrequenzcode gespeichert sind, bei dem zum Abtasten der Magnetspur eine Relativbewegung zwischen der Magnetspeicherkarte und einem elektromagnetischen Wandler erzeugt wird, der durch die Magnetflußänderung induzierte Spannungsimpulse abgibt, und bei dem die gegenseitigen zeitlichen Abstände der Spannungsimpulse zum Gewinnen von der Informationen ausgewertet werden, indem zu Beginn eines Abtastvorganges mit gleichbleibenden Vorinformationen eine Normierung erfolgt, wobei der zeitliche Verlauf des Ausgangssignals (U) des elektromagnetischen Wandlers (30) in durch die Normierung vorgegebenen Zeitabständen (T) erfaßt wird, dadurch **gekennzeichnet, daß** beim Abtasten der Magnetspur das Ausgangssignal (U) des elektromagnetischen Wandlers (30) zu vorgegebenen Zeitpunkten in Digitalwerte gewandelt wird, daß erst nach dem Abtasten der Magnetspur die Auswertung der Digitalwerte erfolgt und die Digitalwerte in der Reihenfolge ihres Auftretens gespeichert werden, daß verschiedene Auswerteverfahren bereitgestellt sind, nach denen die in den Digitalwerten wiedergegebene Kurvenform analysierbar ist und bei denen jeweils ein Satz binärer Informationen gewonnen wird, und daß aus der Art des Verlaufs der Kurvenform und der relativen Lage charakteristischer Kurvenformteile zueinander die in der Magnetspur gespeicherte Information gewonnen wird.

2. Verfahren nach Anspruch 1, dadurch **gekennzeichnet**, daß bei einem ersten Auswertungsverfahren ein im Verlauf des Ausgangssignals (U) des elektromagnetischen Wandlers (30), in durch die Normierung vorgegebenen Zeitabständen (T) erfaßt, auftretender Extremwert festgestellt wird, und daß das Verhältnis der Art dieses Extremwertes zu der Art eines zuvor festgestellten Extremwertes zur Informationsgewinnung ausgewertet wird.

3. Verfahren nach Anspruch 2, dadurch **gekennzeichnet,** daß für jeden Erfassungsvorgang ein Zeitabschnitt (2Tf) vorgegeben wird.

4. Verfahren nach Anspruch 3, dadurch **gekennzeichnet**, daß die Länge des Zeitabschnitts kürzer als 1/3 des Zeitabstandes (T) ist.

5. Verfahren nach einem der vorhergehenden Ansprüche, dadurch **gekennzeichnet**, daß die Art des Extremwertes durch Vergleich mit einem Schwellwert (S1, S2) festgestellt wird.

6. Verfahren nach Anspruch 5, dadurch **gekennzeichnet,** daß der Schwellwert (S1) durch arithmetische Mittelwertbildung des Ausgangssignals (U) des elektromagnetischen Wandlers (30) über der Zeit (t) ermittelt wird.

7. Verfahren nach Anspruch 5 oder 6, dadurch **gekennzeichnet**, daß der Schwellwert (S2) nach einem festgestellten Extremwertwechsel um einen vorgegebenen Betrag (b) so geändert wird, daß sein Abstand zum zuletzt festgestellten Extremwert vergrößert ist.

8. Verfahren nach Anspruch 1, dadurch **gekennzeichnet,** daß bei einem zweiten Auswertungsverfahren die im zeitlichen Verlauf des Ausgangssignals (U) aufeinander folgende Extremwerte unterschiedlicher Art festgestellt werden, daß die Zeit (t1 bis t4) zwischen diesen Extremwerten gemessen wird, daß das Verhältnis dieser Zeit (t1 bis t4) zu den durch die Normierung vorgegebenen Zeitabständen (T) zur Informationsgewinnung ausgewertet wird, und daß im weiteren Verlauf der Auswertung die nächste Zeitmessung erst beim nachfolgenden Extremwert beginnt, wenn die Zeit (t1, t4) kürzer als die Zeitabstände (T) ist.

9. Verfahren nach Anspruch 8, dadurch **gekennzeichnet,** daß die gemessene Zeit (t1 bis t4) mit dem 0,7-Fachen der Zeitabstände (T) verglichen wird.

10. Verfahren nach Anspruch 9, dadurch **gekennzeichnet,** daß die gewonnenen Informationen einer Fehlerprüfung unterzogen werden, und daß beim Auftreten eines Fehlers die gemessene Zeit (t1 bis t4) mit dem 0,66- bis 0,7-Fachen oder mit dem 0,7- bis 0,75-Fachen der Zeitabstände (T) verglichen wird.

11. Verfahren nach Anspruch 1, dadurch **gekennzeichnet,** daß bei einem dritten Auswertungsverfahren der zeitliche Verlauf des Ausgangssignals (U) über jeden durch die Normierung vorgegebenen Zeitabstand (T) erfaßt wird, daß für jeweils einen' Binärzustand (B) der Information mindestens ein Verlaufsmuster (VL$_1$ bis VL$_4$) mit der Länge des Zeitabstandes (T) bereitgestellt wird, daß der erfaßte Verlauf des Ausgangssignals (U) mit mindestens zwei Verlaufsmustern (VL$_1$ bis VL$_4$) verglichen wird, und daß das Vergleichsergebnis mit der geringsten Abweichung (W) ermittelt wird.

12. Verfahren nach Anspruch 11, dadurch **gekennzeichnet,** daß zum Vergleich die mittlere quadratische Abweichung oder die mittlere Betragsabweichung des Ausgangssignalverlaufs (U) vom Verlaufsmuster (VL$_1$ bis VL$_4$) bestimmt wird.

13. Verfahren nach Anspruch 11 oder 12, dadurch **gekennzeichnet,** daß für den Binärwert 0 als Verlaufsmuster (VL$_1$ bzw. VL$_2$) eine Gerade mit konstanter positiver oder negativer Steigung und für den Binärwert 1 als Verlaufsmuster (VL$_3$ bzw. VL$_4$) eine Gerade mit konstanter positiver und dann negativer Steigung oder umgekehrt mit Vorzeichenwechsel in der Mitte des Zeitabstandes (T) bereitgestellt wird.

14. Verfahren nach Anspruch 13, dadurch **gekennzeichnet,** daß die Wahl der Verlaufsmuster (VL$_1$ bis VL$_4$) abhängig von dem zuvor festgestellten Ausgangssignalverlauf (U) erfolgt.

15. Verfahren nach einem der Ansprüche 11 bis 14, dadurch **gekennzeichnet,** daß die Abweichungen (W) des zeitlichen Verlaufs des Ausgangssignals (U) von dem Verlauf desjenigen Verlaufsmusters (VL$_1$ bis VL$_4$) mit geringster Abweichung bestimmt werden, daß eine Korrektur des Verlaufsmusters (VL$_1$ bis VL$_4$) abhängig von diesen Abweichungen (W) erfolgt, und daß im weiteren Verlauf der Auswertung das korrigierte Verlaufsmuster (VL$_1$ bis VL$_4$, VL$_1$') mit dem Ausgangssignalverlauf (U) verglichen sowie der Korrektur unterzogen wird.

16. Verfahren nach Anspruch 15, dadurch **gekennzeichnet,** daß das Verlaufsmuster (VL$_1$) um die Hälfte der Abweichungen (W) korrigiert wird.

17. Verfahren nach einem der Ansprüche 11 bis 16, dadurch **gekennzeichnet,** daß zum Vergleich ein normierter Korrelationskoeffizient (Rxy,i) aus den Verlaufsmustern (VL1 bis VL4) und dem erfaßten Verlauf des Ausgangssignals (U) gebildet wird, und daß seine Abweichung vom Wert 1 ermittelt wird.

18. Verfahren nach einem der vorhergehenden Ansprüche, dadurch **gekennzeichnet,** daß aus den bei der Normierung ermittelten Zeitabständen (T) ein mittlerer Zeitabstand (Tm) gebildet wird, der im weiteren Verlauf für die Auswertung verwendet wird.

19. Verfahren nach einem der vorhergehenden Ansprüche, dadurch **gekennzeichnet,** daß die zum Binärwert 0 gehörende Zeit (Tist) zwischen aufeinander folgenden Extremwerten gemessen wird, und daß bei Abweichen des aus der Normierung ermittelten Zeitabstands (T, Tm) von der Zeit (Tist) eine Korrektur des Zeitabstandes (T, Tm) erfolgt.

20. Verfahren nach Anspruch 19, dadurch **gekennzeichnet,** daß der Zeitabstand (T, Tm) um die halbe Abweichung korrigiert wird, und daß im weiteren Verlauf der Auswertung der korrigierte Zeitabstand (T, Tm) verwendet wird.

21. Verfahren nach einem der vorhergehenden Ansprüche, dadurch **gekennzeichnet,** daß das Ausgangssignal (U) zu regelmäßig vorgegebenen Zeitpunkten innerhalb eines jeden durch die Normierung vorgegebenen Zeitabstandes (T) in Digitalwerte gewandelt wird, und daß die Zahl der zwischen den digitalen Extremwerten liegenden Digitalwerte zur Informationsgewinnung ausgewertet wird.

22. Verfahren nach Anspruch 21, dadurch **geken-**

**neichnet,** daß die Extremwerte durch Wertvergleich einander benachbarter Digitalwerte ermittelt werden, und daß ein Maximalwert bzw. ein Minimalwert festgestellt wird, wenn ihre benachbarten Werte kleiner bzw. größer sind.

23. Verfahren nach Anspruch 21 oder 22, dadurch **gekennzeichnet**, daß die Zeitpunkte für die A/D-Wandlung nach der Beziehung Tad < (16vd)$^{-1}$ eingestellt werden, wobei Tad der Abstand der Zeitpunkte in s, v die Relativgeschwindigkeit zwischen der Magnetkarte (10) und dem Wandler (30) in mm/s und d die Flußwechseldichte auf der Magnetspur in 1/mm ist.

24. Verfahren nach Anspruch 1, dadurch **gekennzeichnet**, daß mehrere Sätze binärer Informationen untereinander verglichen werden und daß das Vergleichsergebnis einer Plausibilitätsprüfung unterzogen wird.

25. Verfahren nach Anspruch 24, dadurch **gekennzeichnet**, daß für die weitere Auswertung der Digitalwerte abhängig vom Ergebnis der Plausibilitätsprüfung eine bestimmte Auswertungsvariante ausgewählt wird.

**Claims**

1. Method for evaluating binary information which is stored on the magnetic track of a magnetic storage card in the form of flux changes in accordance with the two-frequency code, in which to scan the magnetic track a relative movement is produced between the magnetic storage card and an electromagnetic transducer which outputs voltage pulses induced by the magnetic flux changes, and in which the mutual temporal spacings of the voltage pulses are evaluated to acquire information by normalizing at the start of a scanning operation with constant preliminary information, the time profile of the output signal (U) of the electromagnetic transducer (30) being recorded in time intervals (T) prescribed by the normalizing, characterized in that during scanning of the magnetic track the output signal (U) of the electromagnetic transducer (30) is converted into digital values at prescribed instants, in that the digital values are evaluated only after the scanning of the magnetic track and the digital values are stored in the sequence of their occurrence, in that various evaluation methods are provided which can be used to analyze the curve reproduced in the digital values, and in which a set of binary information items is obtained in each case, and in that the information stored in the magnetic track is obtained from the type of the profile of the curve and the relative position of characteristic curve segments relative to one another.

2. Method according to Claim 1, characterized in that in a first evaluation method an extreme value occurring in the time profile of the output signal (U) of the electromagnetic transducer (30), rrecorded in time intervals (T) prescribed by the normalizing, is determined, and in that the relationship of the type of this extreme value to the type of a previously determined extreme value is evaluated to obtain information.

3. Method according to Claim 2, characterized in that one time period (2Tf) is prescribed for each recording operation.

4. Method according to Claim 3, characterized in that the length of the time period is shorter than 1/3 of the time interval (T).

5. Method according to one of the preceding claims, characterized in that the type of the extreme value is determined by comparison with a threshold value (S1, S2).

6. Method according to Claim 5, characterized in that the threshold value (S1) is determined by forming the arithmetic mean of the output signal (U) of the electromagnetic transducer (30) over time (t).

7. Method according to Claim 5 or 6, characterized in that after a determined change in extreme value by a prescribed amount (b), the threshold value (S2) is changed such that its spacing from the extreme value last determined is increased.

8. Method according to Claim 1, characterized in that in a second evaluation method the extreme values of different type following one another in the time profile of the output signal (U) are determined, in that the time (t1 to t4) between these extreme values is measured, in that the relationship of this time (t1 to t4) to the time intervals (T) prescribed by the normalizing is evaluated to obtain information, and in that in the further course of the evaluation the next time measurement does not start until the following extreme value when the time (t1, t4) is shorter than the time intervals (T).

9. Method according to Claim 8, characterized in that the measured time (t1 to t4) is compared with the 0.7-fold multiple of the time intervals (T).

10. Method according to Claim 9, characterized in that the information obtained is subjected to error checking, and in that upon the occurrence of an error the measured time (t1 to t4) is compared with the 0.66-fold to 0.7-fold multiple or with the 0.7-fold to 0.75-fold multiple of the time intervals (T).

11. Method according to Claim 1, characterized in that in a third evaluation method the time profile of the output signal (U) is recorded over each time interval (T) prescribed by the normalizing, in that at least one profile pattern ($VL_1$ to $VL_4$) with the length of the time interval (T) is provided for in each case one binary state (B) of the information, in that the recorded profile of the output signal (U) is compared with at least two profile patterns ($VL_1$ to $VL_4$), and in that the result of comparison with the smallest deviation (W) is determined.

12. Method according to Claim 11, characterized in that the root-mean square deviation or the mean absolute deviation of the output signal profile (U) from the profile pattern ($VL_1$ to $VL_4$) is determined for the purpose of comparison.

13. Method according to Claim 11 or 12, characterized in that a straight line with a constant positive or negative gradient is provided as profile pattern ($VL_1$ or $VL_2$) for the binary value 0, and a straight line with a constant positive and then negative gradient, or vice versa, with the change in sign in the middle of the time interval (T) is provided as profile pattern ($VL_3$ or $VL_4$) for the binary value 1.

14. Method according to Claim 13, characterized in that the profile patterns ($VL_1$ to $VL_4$) are selected as a function of the previously determined output signal profile (U).

15. Method according to one of Claims 11 to 14, characterized in that the deviations (W) of the time profile of the output signal (U) from the profile of that profile pattern ($VL_1$ to $VL_4$) having the smallest deviation are determined, in that a correction of the profile pattern ($VL_1$ to $VL_4$) is performed as a function of these deviations (W), and in that in the further course of evaluation the corrected profile pattern ($VL_1$ to $VL_4$, $VL_1'$) is compared with the output signal profile (U) and subjected to the correction.

16. Method according to Claim 15, characterized in that the profile pattern ($VL_1$) is corrected by half of the deviations (W).

17. Method according to one of Claims 11 to 16, characterized in that a normalized correlation coefficient (Rxy,i) is formed for comparison from the profile patterns (VL1 to VL4) and the recorded profile of the output signal (U), and in that its deviation from the value 1 is determined.

18. Method according to one of the preceding claims, characterized in that a mean time interval (Tm), which is used for evaluation in the further course, is formed from the time intervals (T) determined during normalization.

19. Method according to one of the preceding claims, characterized in that the time (Tist) belonging to the binary value 0 is measured between successive extreme values, and in that the time interval (T, Tm) is corrected in the case of deviation of the time interval (T, Tm) determined from the normalization from the time (Tist).

20. Method according to Claim 19, characterized in that the time interval (T, Tm) is corrected by half the deviation, and in that the corrected time interval (T, Tm) is used in the further course of the evaluation.

21. Method according to one of the preceding claims, characterized in that the output signal (U) is converted to digital values at regularly prescribed instants within each time interval (T) prescribed by the normalization, and in that the number of the digital values situated between the digital extreme values is evaluated to obtain information.

22. Method according to Claim 21, characterized in that the extreme values are determined by comparing the values of mutually adjacent digital values, and in that a maximum value or a minimum value is determined when their adjacent values are smaller or larger.

23. Method according to Claim 21 or 22, characterized in that the instants for the A/D conversion are set according to the relationship Tad < $(16vd)^{-1}$, Tad being the spacing of the instants in s, v being the relative velocity between the magnetic card (10) and the transducer (30) in mm/s, and d being the density of flux changes on the magnetic track in 1/mm.

24. Method according to Claim 1, characterized in that a plurality of sets of binary information items are intercompared, and in that the result of comparison is subjected to a plausibility check.

25. Method according to Claim 24, characterized in that a specific evaluation variant is selected for further evaluation of the digital values as a function of the result of the plausibility check.

**Revendications**

1. Procédé d'exploitation des informations binaires qui sont mémorisées sur la piste magnétique d'une carte à mémoire magnétique sous forme de changements de flux magnétiques selon le code à deux fréquences, dans lequel on produit, pour balayer la piste magnétique, un mouvement relatif entre la carte à mémoire magnétique et un convertisseur électromagnétique qui fournit des impulsions de tension induites par la variation de flux magnétique, et dans lequel on exploite, pour obtenir les informations, les intervalles de temps qui séparent des impulsions de tension, un cadrage s'effectuant au début d'une opération de balayage avec des informations préalables restant identiques, la variation dans le temps du signal de sortie (U) du convertisseur électromagnétique (30) étant détectée dans des intervalles de temps (T) prescrits par le cadrage, caractérisé par le fait que l'on convertit lors du balayage de la piste magnétique le signal de sortie (U) du convertisseur électromagnétique (30) à des instants prédéterminés en des valeurs numériques, que l'on procéde à l'exploitation des valeurs numériques seulement après le balayage de la piste magnétique et que l'on mémorise les valeurs numériques dans l'ordre de leur apparition, que l'on dispose de divers procédés d'exploitation, par lesquels on peut analyser la forme de la courbe donnée par les valeurs numériques et par lesquels on obtient respectivement un ensemble d'informations binaires, et que l'on obtient l'information mémorisée dans la piste magnétique à partir du type de la variation de la forme de la courbe et à partir de la position relative des parties caractéristiques de la forme de la variation les unes par rapport aux autres.

2. Procédé selon la revendication 1, caractérisé par le fait que, dans un premier procédé d'exploitation, on détermine une valeur extrême apparaissant dans la variation dans le temps du signal de sortie (U) du convertisseur électromagnétique (30) dans des intervalles de temps (T) prescrits par le cadrage et que l'on exploite pour obtenir l'information le rapport du type de cette valeur extrême au type d'une valeur extrême déterminée auparavant.

3. Procédé selon la revendication 2, caractérisé par le fait que l'on prescrit pour chaque opération de détection une fenêtre temporelle (2Tf).

4. Procédé selon la revendication 3, caractérisé par le fait que la longueur de la fenêtre temporelle est plus petite que le 1/3 de l'intervalle de temps (T).

5. Procédé selon l'une des revendications précédentes, caractérisé par le fait que l'on détermine le type de la valeur extrême par une comparaison avec une valeur de seuil (S1, S2).

6. Procédé selon la revendication 5, caractérisé par le fait que l'on détermine la valeur de seuil (S1) en calculant la moyenne arithmétique du signal de sortie (U) du convertisseur électromagnétique (30) sur le temps (t).

7. Procédé selon la revendication 5 ou 6, caractérisé par le fait que l'on modifie d'une valeur prédéterminée (b) la valeur de seuil (S2) après avoir déterminé un changement de valeur extrême de manière à augmenter son écart par rapport à la dernière valeur extrême déterminée.

8. Procédé selon la revendication 1, caractérisé par le fait que, dans un deuxième procédé d'exploitation, on détermine les valeurs extrêmes de type différent qui se suivent dans la variation dans le temps du signal de sortie (U), que l'on mesure le temps (t1 à t4) entre ces valeurs extrêmes, que l'on exploite, pour obtenir l'information, le rapport de ces temps (t1 à t4) aux intervalles de temps (T) prescrits lors du cadrage, et que l'on fait débuter, lorsque l'on continue à procéder à l'exploitation, la prochaine mesure de temps seulement pour la valeur extrême suivante lorsque le temps (t1, t4) est plus court que les intervalles de temps (T).

9. Procédé selon la revendication 8, caractérisé par le fait que l'on compare le temps mesuré (t1 à t4) avec 0,7 fois les intervalles de temps (T).

10. Procédé selon la revendication 9, caractérisé par le fait que l'on soumet les informations obtenues à un contrôle d'erreur et, lors de l'apparition d'une erreur, on compare le temps mesuré (t1 à t4) avec 0,66 à 0,7 fois ou avec 0,7 à 0,75 fois les intervalles de temps (T).

11. Procédé selon la revendication 1, caractérisé par le fait que, dans un troisième procédé d'exploitation, on détecte la variation dans le temps du signal de sortie (U) dans chaque intervalle de temps prescrit par le cadrage, on prépare pour chaque état binaire (B) de l'information au moins un modèle de variation ($VL_1$ à $VL_4$) ayant la longueur de l'intervalle de temps (T), que l'on compare la variation détectée du signal de sortie (U) à au moins deux modèles de variation ($VL_1$ à $VL_4$) et que l'on détermine le résultat de comparaison présentant le plus petit écart (W).

12. Procédé selon la revendication 11, caractérisé par le fait que l'on détermine pour la comparaison l'écart quadratique moyen ou l'écart absolu moyen de la variation du signal de sortie (U) au modèle de variation ($VL_1$ à $VL_4$).

13. Procédé selon la revendication il ou 12, caractérisé par le fait que l'on prépare pour la valeur binaire 0 comme modèle de variation ($VL_1$ ou $VL_2$) une droite ayant une pente constante positive ou négative et pour la valeur binaire 1 comme modèle de variation ($VL_3$ ou $VL_4$) une droite ayant une pente constante d'abord positive, puis négative ou inversement, avec un changement de signe au centre de l'intervalle de temps (T).

**14.** Procédé selon la revendication 13, caractérisé par le fait que l'on effectue le choix des modèles de variation ($VL_1$ à $VL_4$) en fonction de la variation du signal de sortie (U) déterminée auparavant.

**15.** Procédé selon l'une des revendications il à 14, caractérisé par le fait que l'on détermine les écarts (w) de la variation dans le temps du signal de sortie (U) à la variation du modèle de variation ($VL_1$ à $VL_4$) présentant le plus petit écart, que l'on effectue une correction du modèle de variation ($VL_1$ à $VL_4$) en fonction de ces écarts (W) et que, lorsque l'on continue à procéder à l'exploitation, on compare le modèle de variation corrigé ($VL_1$ à $VL_4$, $VL_1'$) à la variation du signal de sortie (U) et on le soumet à la correction.

**16.** Procédé selon la revendication 15, caractérisé par le fait que l'on corrige le modèle de variation ($VL_1$) de la moitié des écarts (W).

**17.** Procédé selon l'une des revendications il à 16, caractérisé par le fait que, pour la comparaison, on forme un coefficient de corrélation normé ($Rxy,i$) à partir des modèles de variation ($VL_1$ à $VL_4$) et de la variation détectée du signal de sortie (U) et que l'on détermine son écart par rapport à la valeur 1.

**18.** Procédé selon l'une des revendications précédentes, caractérisé par le fait que l'on forme à partir des intervalles de temps (T) déterminés lors du cadrage un intervalle de temps moyen (Tm) qui est utilisé lorsque l'on continue à procéder à l'exploitation.

**19.** Procédé selon l'une des revendications précédentes, caractérisé par le fait que l'on mesure le temps (Tist), associé à la valeur binaire 0, entre des valeurs extrêmes successives et que, lorsque le temps (Tist) s'écarte de l'intervalle de temps (T, Tm) déterminé lors du cadrage, on effectue une correction de l'intervalle de temps (T, Tm).

**20.** Procédé selon la revendication 19, caractérisé par le fait que l'on corrige l'intervalle de temps (T, Tm) de la moitié de l'écart et que l'on utilise, lorsque l'on continue à procéder à l'exploitation, l'intervalle de temps (T, Tm) corrigé.

**21.** Procédé selon l'une des revendications précédentes, caractérisé par le fait que l'on convertit le signal de sortie (U) en des valeurs numériques à des instants régulièrement prédéterminés dans chaque intervalle de temps (T) prescrit par le cadrage et que l'on exploite, pour obtenir l'information, le nombre des valeurs numériques se trouvant entre les valeurs numériques extrêmes.

**22.** Procédé selon la revendication 21, caractérisé par le fait que l'on détermine les valeurs extrêmes par une comparaison de valeurs numériques voisines et que l'on détermine s'il s'agit d'une valeur maximale ou d'une valeur minimale selon que ses valeurs voisines sont plus petites ou plus grandes.

**23.** Procédé selon la revendication 21 ou 22, caractérisé par le fait que l'on règle les instants pour la conversion analogique-numérique selon la relation Tad $< (16vd)^{-1}$, Tad étant l'écart des instants en s, v étant la vitesse relative entre la carte magnétique (10) et le convertisseur (30) en mm/s et d étant la densité de changements de flux magnétiques sur la piste magnétique en 1/mm.

**24.** Procédé selon la revendication 1, caractérisé par le fait que l'on compare plusieurs ensembles d'informations binaires et que l'on soumet le résultat de la comparaison à un contrôle de vraisemblance.

**25.** Procédé selon la revendication 24, caractérisé par le fait que, pour continuer à procéder à l'exploitation des valeurs numériques, on choisit une certaine variante d'exploitation en fonction du résultat du contrôle de vraisemblance.

Fig. 1

Fig. 2

Fig.3

```
┌─────────────────────┐
│   Feststellen der   │ ─── 46
│   Null-Abstände T   │
└─────────────────────┘
           │
┌─────────────────────┐
│ mittleren Abstand Tm│ ─── 48
│     berechnen       │
└─────────────────────┘
           │
    ┌──────────────┐
 n  │  Tm(n) ≠ Tist │ ─── 50
┌───┤              │
│   └──────────────┘
│          │ j
│   ┌──────────────────────────────┐
│   │      Tm  korrigieren         │ ─── 52
│   │ Tm(n+1) = (Tist(n)+Tm(n))/2  │
│   └──────────────────────────────┘
│          │
│   ┌──────────────────┐
└──▶│  Tm(n+1) ausgeben │ ─── 54
    └──────────────────┘
```

Fig. 4

Fig.5

```
                    ┌─────────────────────────────┐
                    │   Daten D während des       │ ⌐66
                    │   Zeitfensters einlesen      │
                    └─────────────────────────────┘
                                  │
                    ┌─────────────────────────────┐
                    │  Extremwert E und Art k      │
                    │      feststellen             │ ⌐68
                    │  Max {D} ;   Min {D}         │
                    └─────────────────────────────┘
                                  │
                    ┌─────────────────────────────┐
                    │  Zeitabstand zum letzten     │
                    │ Extremwert feststellen (Tist);│ ⌐70
                    │     Tm  korrigieren          │
                    └─────────────────────────────┘
                                  │
                                                      ⌐72
                    ╱───────────────────────────╲
                   ╱                              ╲      n
                  ╱   k (n)   =   k (n-1)          ╲─────────┐
                   ╲                              ╱         │
                    ╲───────────────────────────╱          │
                             │                              │
                             │ j                            │
                             │                              │
          ┌──────────────────────────┐      ┌──────────────────────────┐
          │   Binärwert B=1          │ ⌐76  │   Binärwert B=0          │ ⌐74
          └──────────────────────────┘      └──────────────────────────┘
                             │                              │
                             └──────────────┬───────────────┘
                                            │
          ┌───────────────────────────────────────┐
          │   Zeitfenster berechnen               │ ⌐78
          │   t(n+1)  =  t(n)+Tm ± Tf             │
          └───────────────────────────────────────┘
```

$$t(n+1) = t(n) + Tm \pm Tf$$

Fig.6

Fig.6a

Fig.7

```
                    ┌─────────────────────────┐
                    │                         │
                    │    m  Daten einlesen    │────  90
                    │                         │
                    └─────────────────────────┘
                                │
                    ┌─────────────────────────┐
                    │  Extremwert E und Art   │
                    │      feststellen        │────  92
                    │  Max {m} ;   Min {m}    │
                    └─────────────────────────┘
                                │
                    ┌─────────────────────────┐
                    │                         │
                    │   Zeitmessung starten   │────  94
                    │                         │
                    └─────────────────────────┘
                                │
                    ┌─────────────────────────┐
                    │                         │
                    │    m  Daten einlesen    │────  96
                    │                         │
                    └─────────────────────────┘
                                │
                    ┌─────────────────────────┐
                    │  Extremwert feststellen │────  98
                    │  Max {m} ;   Min {m}    │
                    └─────────────────────────┘
                                │
                    ┌─────────────────────────┐
                    │   Zeitmessung beenden   │────  100
                    └─────────────────────────┘
                                │
                         ╱───────────────╲
                    j  ╱   Te  <  3/4 Tm   ╲  n ────  102
                       ╲                   ╱
                         ╲───────────────╱
          106                              104
    ┌──────────────────┐          ┌──────────────────┐
    │  Binärwert B=1   │          │  Binärwert B=0   │
    └──────────────────┘          └──────────────────┘
```

Fig.8

Fig.9a

Fig.9b

Fig.9c

Fig.9d

Fig. 10a

Fig. 10b

Fig. 10c

Fig. 11

Bereitstellen der Daten
der Verlaufsmuster

$VL_i$ mit $i = 1, 2, 3, 4$ — 110

Einlesen der Daten D
eines Zeitabschnitts T — 112

$W_i = /\{D\} - \{VL_i\}/$

mit $i = 1, 2, 3, 4$ — 114

Minimum $\{W_i\}$ — 116

118 — $i = 1$ → j Binärwert $B = 0$ — 120

n

122 — $i = 2$ → j Binärwert $B = 0$ — 124

n

126 — $i = 3$ → j Binärwert $B = 1$ — 128

n

Binärwert $B = 1$

130

132 — $VL_i (n+1) = \left( VL_i(n) + D(n) \right)/2$

Fig. 12

Fig. 13

Bereitstellen der Daten
der Verlaufsmuster
$VL_i$ mit i = 1, 2, 3, 4 — 150

Einlesen der Daten
eines Zeitabschnitts T — 152

Korrelationskoeffizienten
$Rxy, i$ bilden, mit i = 1, 2, 3, 4 — 154

Maximum $\{Rxy, i\}$ — 156

158 — i = 1

B = 0 — 164

160 — i = 2

166 — B = 0

162 — i = 3

168 — B = 1

B = 1

170

Fig.14